# EUROPÄISCHE PATENTSCHRIFT

(11) **EP 4 449 064 B1**
(45) Veröffentlichungstag und Bekanntmachung des Hinweises auf die Patenterteilung: **05.03.2025**
(21) Anmeldenummer: 23713594.2
(22) Anmeldetag: 16.03.2023
(51) Int. Cl.: G01F 1/58, G01F 1/64, G01F 23/24, G01F 23/26

(54) **VERFAHREN ZUR FÜLLSTANDSERMITTLUNG EINES ROHRS, AUSWERTUNGSEINHEIT, DURCHFLUSSMESSSYSTEM UND COMPUTERPROGRAMMPRODUKT**
METHOD FOR DETERMINING THE FILL LEVEL OF A PIPE, EVALUATION UNIT, FLOW MEASUREMENT SYSTEM AND COMPUTER PROGRAM PRODUCT
PROCÉDÉ DE DÉTERMINATION DU NIVEAU DE REMPLISSAGE D'UN TUYAU, UNITÉ D'ÉVALUATION, SYSTÈME DE MESURE DE DÉBIT ET PRODUIT-PROGRAMME INFORMATIQUE

(30) Priorität: 28.03.2022 DE 102022203021
(43) Veröffentlichungstag der Anmeldung: 23.10.2024
(73) Patentinhaber: Siemens Aktiengesellschaft, 80333 München (DE)
(72) Erfinder: WILKENING, Wilko, 91052 Erlangen (DE); NAIT MEZIANE, Mohamed, 67800 Bischheim (FR); RECKWERTH, Timo, 76744 Wörth am Rhein (DE)
(74) Vertreter: Siemens Patent Attorneys
(86) Internationale Anmeldenummer: PCT/EP2023/056745
(87) Internationale Veröffentlichungsnummer: WO 2023/186561

(56) Entgegenhaltungen:
- EP-B1- 3 237 849
- DE-A9- 102010 020 963
- DE-B3- 102020 112 129
- DE-U1- 9 204 374
- KR-B1- 102 171 789

## Beschreibung

Die Erfindung betrifft ein Verfahren zum Ermitteln eines Füllstands in einem Rohr und eine Auswertungseinheit, mit dem das Verfahren durchführbar ist. Weiter betrifft die Erfindung ein Durchflussmesssystem, das über eine solche Auswertungseinheit verfügt. Ebenso betrifft die Erfindung ein Computerprogrammprodukt, mit dem ein Betriebsverhalten eines solchen Durchflussmesssystem simulierbar ist.

Aus der Druckschrift US 2017/131131 A1 ist ein elektromagnetischer Durchflussmesser bekannt, der dazu geeignet ist, eine Impedanz in einem Rohr zu messen. Zum Messen eines Füllgrades des Rohrs ist an dessen Umfang eine Mehrzahl an Elektroden angeordnet. Durch paarweises Messen von Impedanzen an den Elektroden ist feststellbar, welche der Elektroden mit dem Fluid benetzt ist.

Die Internationale Patentanmeldung WO 2008/113774 A2 offenbart ein Verfahren zur Bestimmung der elektrischen Leitfähigkeit eines Mediums mittels eines magnetisch-induktiven Durchflussmessgeräts. Das Durchflussmessgerät weist zwei gegenüberliegende Messelektroden, eine Erdungselektrode und zwei gegenüberliegende Spulenanordnungen auf. Zum Erfassen der elektrischen Leitfähigkeit werden Erregungssignale unterschiedlicher Frequenz erzeugt und eine zwischen jeweils der Messelektrode und der Erdungselektrode vorliegende Impedanz gemessen.

Die Druckschrift DE 10 2010 020 963 A9 offenbart ein Verfahren zum Betrieb eines magnetischen Durchflussmessers, der eine Mehrzahl an Elektroden aufweist, die entlang eines Rohrquerschnitts angeordnet sind. Die Elektroden bilden Elektrodenpaare. In die Elektroden werden Signale eingespeist und Impedanzen und/oder Spannungen gemessen. Durch Permutation der Elektrodenpaare, in die Signale eingespeist werden, wird durch entsprechende Messungen eine Füllhöhe im Rohrquerschnitt ermittelt.

Durchflussmesssysteme werden in einer Vielzahl an Anwendungen in der Automatisierungstechnik eingesetzt. Neben der Durchflussmessung selbst werden zusätzliche Funktionen wie eine Füllstandsmessung angestrebt. Gleichzeitig bestehen steigende Anforderungen an die Kompaktheit, Zuverlässigkeit und Kosteneffizienz solcher Durchflussmesssysteme. Der Erfindung liegt die Aufgabenstellung zugrunde, eine Möglichkeit zur Bestimmung eines Füllstands in einem Rohr bereitzustellen, die eine hohe Messgenauigkeit bietet, platzsparend, robust und kosteneffizient ist und in das Funktionsspektrum bestehender Durchflussmesssysteme integrierbar ist.

Die Aufgabenstellung wird durch ein erfindungsgemäßes Verfahren zum Ermitteln eines Füllstands eines Rohrs gelöst. Im Rohr ist ein Fluid aufgenommen, das das Rohr im bestimmungsgemäßen Betrieb durchströmt und das bei einer teilweisen Befüllung des Rohrs, also einem Füllstand unterhalb von 100 Prozent, einen Pegel bildet. Am Rohr sind eine erste und zweite ansteuerbare Messelektrode angeordnet. Die Messelektroden sind insoweit ansteuerbar, dass dort zumindest eine elektrische Größe wie Spannung oder Stromstärke vorgebbar ist. Die Messelektroden erstrecken sich in das Lumen des Rohrs und sind durch das Fluid benetzbar. Weiter ist das Rohr mit mindestens einer Erdungselektrode versehen. Das Verfahren umfasst einen ersten Schritt, in dem das Rohr in einem zumindest teilweise mit dem Fluid befüllten Zustand bereitgestellt wird. Der Füllstand beträgt im ersten Schritt folglich über 0 Prozent und die erste und zweite Messelektrode sind durch das Fluid benetzt.

Weiter umfasst das Verfahren einen zweiten Schritt, in dem die erste und zweite Messelektrode durch Anlegen von gegensinnigen Messströmen angeregt werden. Die gegensinnigen Mesströme weisen Stromstärken unterschiedlicher Vorzeichen auf, so dass die Mesströme einen Stromfluss von der ersten zur zweiten Messelektrode hervorrufen. Dadurch wird das Prinzip einer sogenannten Gegentaktanregung verwirklicht. Darüber hinaus erfolgt im zweiten Schritt jeweils ein Erfassen zumindest eines ersten Messwerts an der ersten und/oder zweiten Messelektrode. Der erste Messwert kann beispielsweise eine an der ersten bzw. zweiten Messelektrode anliegende Spannung sein. Die erste bzw. zweite Messelektrode kann hierzu mit geeigneten Messmitteln versehen sein.

Zum Verfahren gehört ebenso ein dritter Schritt, in dem die erste und zweite Messelektrode durch Anlegen von gleichsinnigen Messströmen angeregt werden. Komplementär zum zweiten Schritt weisen die Messströme im dritten Schritt Stromstärken mit gleichem Vorzeichen auf. Die Messströme im dritten Schritt rufen dadurch einen Stromfluss von der ersten und zweiten Messelektrode zur ersten Erdungselektrode hervor oder umgekehrt. Dadurch wird das Prinzip einer sogenannten Gleichtaktanregung verwirklicht. Im dritten Schritt wird weiter jeweils zumindest ein zweiter Messwert an der ersten und/oder zweiten Messelektrode erfasst. Der zweite Messwert kann, korrespondierend zum ersten Messwert, beispielsweise eine an der ersten bzw. zweiten Messelektrode anliegende Spannung sein. Auch hierzu können die erste bzw. zweite Messelektrode mit geeigneten Messmitteln versehen sein. Das Anregen der ersten und zweiten Messelektrode kann mit Gleichstrom oder mit Wechselstrom erfolgen. Anregungen mit Wechselstrom umfasst auch Messströme mit einer Signalkodierung, beispielsweise Schwingungspakete, sogenannte Bursts, frequenzmodulierte Signale und/oder sogenannte Barker-Codes.

Des Weiteren weist das Verfahren einen vierten Schritt auf, in dem der Füllstand des Rohrs zumindest anhand zumindest des ersten und zweiten Messwerts ermittelt wird, die im zweiten bzw. dritten Schritt erfasst werden. Ferner kann im vierten Schritt der ermittelte Füllstand an einen Benutzer, beispielsweise über eine Anzeigeeinheit, oder über eine Datenschnittstelle, beispielsweise an eine übergeordnete Steuereinheit, ausgegeben werden. Die Erfindung basiert unter anderem auf der überraschenden Erkenntnis, dass gleichsinnige und gegensinnige Messströme zu unterschiedlichen Charakteristika führen, die wiederum vom Füllstand des Rohrs beeinflusst sind. Diese Charakteristika sind unabhängig von einer Leitfähigkeit des Mediums. Das erfindungsgemäße Verfahren ist dazu geeignet, ohne Kenntnis der elektrischen Leitfähigkeit des Fluids den Füllstand im Rohr zu ermitteln und kann als leitfähigkeitsagnostisch eingestuft werden. Das erfindungsgemäße Verfahren ist damit unempfindlich gegen Änderungen in der Zusammensetzung des Fluids. Folglich dient das Verfahren zu einem leitfähigkeitsunabhängigen bzw. fluidunabhängigen Bestimmen des Füllstands im Rohr. Des Weiteren erfordert das erfindungsgemäße Verfahren ein Minimum an Messelektroden bzw. Erdungselektroden und ist auch an bestehenden Durchflussmesssystem implementierbar. Das erfindungsgemäße Verfahren erlaubt, insbesondere durch Nutzung der genannten Charakteristika, eine im Wesentlichen kontinuierliches Ermitteln des Füllstands. Gegenüber aus dem Stand der Technik bekannten Lösungen wird so deren Einschränkung überwunden, dass diese lediglich eine Füllstandsermittlung in diskreten Schritten ermöglichen, deren Feinschrittigkeit durch die Anzahl an Messelektroden bestimmt ist. Das erfindungsgemäße Verfahren bietet daher eine gesteigerte Messgenauigkeit mit einer reduzierten Anzahl an Komponenten, insbesondere Messelektroden.

Das Verfahren kann wird erfindungsgemäß weiter in einem fünften Schritt durch die erste und/oder zweite Messelektrode zum Messen eines Durchflusses im Rohr verwendet, indem die durch Magnetfelder im Fluid induzierten Spannungen erfasst werden. Das Erfassen der induzierten Spannungen stellt den Messbetrieb dar, der mit einem Durchflussmesssystem bestimmungsgemäß durchführbar ist. Der fünfte Schritt kann in jeglichem Stadium des beanspruchten Verfahrens durchgeführt werden. Ferner kann der fünfte Schritt zumindest teilweise gleichzeitig mit einem der oben oder unten skizzierten Schritte durchgeführt werden. Ebenso können die Magnetfelder, und damit die induzierten Spannungen, die im fünften Schritt erfasst werden, eine andere Frequenz oder Signalkodierung aufweisen als die Messströme gemäß dem zweiten und/oder dritten Schritt. Die Messwerte gemäß dem fünften Schritt sind somit bei einer Auswertung eindeutig unterscheidbar. Dadurch ist das beanspruchte Verfahren insgesamt mit dem bestimmungsgemäßen Messbestrieb kombinierbar. Durch das beanspruchte Verfahren ist die funktionelle Vielseitigkeit eines Durchflussmesssystems entsprechend steigerbar. Ferner kann der im vierten Schritt ermittelte Füllstand als Korrekturwert beim Messen des Durchflusses eingesetzt werden. Das beanspruchte Verfahren bietet damit eine gesteigerte Genauigkeit bei der Durchflussmessung.

In einer Ausführungsform des beanspruchten Verfahrens wird im vierten Schritt anhand des ersten Messwerts eine erste Impedanz ermittelt, die im Fluid vorliegt. Alternativ oder ergänzend wird im vierten Schritt anhand des zweiten Messwerts eine zweite Impedanz ermittelt, die im Fluid vorliegt. Die erste bzw. zweite Impedanz kann anhand der jeweils an der entsprechenden Messelektrode vorliegenden Spannung und der Stromstärke des jeweiligen Messtroms ermittelt werden. Dazu geeignete Messmittel bieten eine erhöhte Messgenauigkeit. Ferner sind Durchflussmesssysteme, an denen das beanspruchte Verfahren durchführbar ist, ohnehin mit geeigneten Messmitteln an ihren Messelektroden versehen. Das beanspruchte Verfahren nutzt somit bereits vorhandene Komponenten des Durchflussmesssystems und ist dadurch kosteneffizient. In Abhängigkeit vom Füllstand des Rohrs zeigen die erste und zweite Impedanz unterscheidbare Charakteristiken, deren Kennlinien mit der im Fluid vorliegenden Leitfähigkeit skalieren. Die erste und zweite Impedanz stellen gegenseitig einen Referenzwert dar. Unabhängig von der Leitfähigkeit des Fluids weisen Kennlinien der zugehörigen Charakteristika zueinander eine qualitativ gleiche Relativlage in einem entsprechenden Diagramm auf. Das beanspruchte Verfahren nutzt infolgedessen eine einfach erfassbare elektrische Eigenschaft des Fluids zur Bestimmung des Füllgrads. Weiter sind entsprechende Charakteristika interpolierbar, so dass jeglicher Wert für die erste bzw. zweite Impedanz exakt auswertbar ist. Hierdurch wird eine gesteigerte Messgenauigkeit erhöht.

Darüber hinaus kann das beanspruchte Verfahren einen sechsten Schritt aufweisen, in dem ein Messwert an der ersten Erdungselektrode und/oder einer zweiten Erdungselektrode zu einem Erkennen eines Absinkens des Füllstands erfasst wird. Durch das Absinken des Füllstands wird eine der Erdungselektroden freigelegt, so dass diese nicht mehr mit Fluid benetzt ist. Der erfasste Messwert betrifft eine elektrische Größe, beispielsweise eine Erdungsstromstärke, die durch das Absinken im Wesentlichen zu Null wird. Die entsprechende Erdungselektrode kann dazu im Bereich eines Scheitelpunkts des Rohrs, also des Rohrquerschnitts, positioniert sein. Korrespondierend kann an der anderen Erdungselektrode gleichzeitig eine Änderung eines daran erfassten Messwerts erfasst werden. Die entsprechende Erdungselektrode kann beispielsweise im Bereich eines Tiefpunkts des Rohrs, also des Rohrquerschnitts, positioniert sein. Insbesondere kann die erste Erdungselektrode im Bereich des Tiefpunkts des Rohrs und die zweite Erdungselektrode im Bereich des Scheitelpunkts des Rohrs angebracht sein. Insbesondere kann durch ein Positionieren einer Messelektrode im Scheitelpunkt ein Absinken des Füllstands unter 100 Prozent zuverlässig erfasst werden. Solange der Füllstand im Wesentlichen 100 Prozent beträgt, ist eine Auswertung von weiteren Charakteristika entbehrlich, wodurch Rechenaufwand einsparbar ist. Dies wiederum erlaubt die Einsparung elektrischer Energie, insbesondere wenn das Durchflussmesssystem eine batteriebetriebene Auswertungseinheit aufweist. Ferner können die Messelektroden und die zumindest eine Erdungselektrode entlang des Rohrs in einer Ebene liegend oder hintereinander liegend angeordnet sein.

Darüber hinaus können die im zweiten und/oder dritten Schritt angeregten Mesströme betragsmäßig im Wesentlichen gleich hoch sein. Dadurch wird das Prinzip einer symmetrischen Anregung verwirklicht. Ebenso können die erste und zweite Messelektrode gegenüberliegend am Rohr angeordnet sein, also maximal beabstandet. Bei betragsmäßig gleichen Mesströmen wird im Fluid eine symmetrische Verteilung an elektrischen Stromdichten erreicht, die in einfacher Weise über den ersten und/oder zweiten Messwert ermittelbar sind. Insbesondere kann die erste Erdungselektrode, bezogen auf den Pegel des Fluids, im Bereich eines Tiefpunkts am Rohr angebracht sein. An der ersten Erdungselektrode liegt bei betragsmäßig gleichen Messströmen im zweiten Schritt als Messwert eine Erdungsstromstärke von im Wesentlichen Null vor. Weiter kann eine zweite Erdungselektrode der ersten Erdungselektrode gegenüberliegend an einem Scheitelpunkt am Rohr angebracht sein. Auch an der zweiten Erdungselektrode am Scheitelpunkt des Rohrs liegt im zweiten Schritt bei betragsmäßig im Wesentlichen gleichen Messströmen eine Erdungsstromstärke von im Wesentlichen Null vor. Im dritten Schritt liegt bei betragsmäßig im Wesentlichen gleichen Messströmen an der ersten und zweiten Messelektrode an der ersten und zweiten Erdungselektrode eine im Wesentlichen gleiche Erdungsstromstärke vor, wenn die erste und zweite Erdungselektrode vom Fluid benetzt sind. Für einen entsprechenden Füllstand, insbesondere 100 Prozent Füllstand, ergibt sich ein definierter Zustand, der sich in den ersten und zweiten Messwerten ausdrückt, die im zweiten und dritten Schritt erfasst werden. Bei Füllständen, bei denen eine der Erdungselektroden freigelegt ist, stellen sich an der ersten und zweiten Messelektrode im zweiten und dritten Schritt gleiche elektrische Größen ein. Insbesondere hängen die ersten Messwerte an der ersten und zweiten Messelektrode lediglich von der Leitfähigkeit des Fluids, also der im Fluid vorliegenden Impedanz, ab. Zusätzlich liegen bei symmetrischer Anregung in der ersten und gegebenenfalls zweiten Messelektrode im dritten Schritt gleiche zweite Messwerte vor. Das beanspruchte Verfahren ist somit in der Lage, selbsttätig einen Eigenzustand zu erkennen, in dem ein Messbetrieb mit erhöhter Genauigkeit durchführbar ist. Folglich ist das beanspruchte Verfahren robust gegen Störeinflüsse. Korrespondierend kann bei Abweichungen der ersten Messwerte an den Messelektroden untereinander und/oder der zweiten Messwerte an den Messelektroden untereinander eine Verunreinigung einer der Messelektroden oder eine Schiefstellung des Durchflussmesssystems erkannt werden. Dazu kann eine entsprechende Warnung ausgegeben werden.

Des Weiteren kann im zweiten Schritt anhand von ersten Messwerten an der ersten und zweiten Messelektrode zwischen diesen eine Asymmetrie erfasst werden. Eine Asymmetrie in den ersten Messwerten drückt eine, bezogen auf eine Symmetrieachse zwischen der ersten und zweiten Messelektrode, Asymmetrie in der vorliegenden Verteilung der Stromdichte aus, die somit über die ersten Messwerte an der ersten und zweiten Messelektrode erfassbar ist. Eine derartige Asymmetrie kann beispielsweise durch Verschmutzungen an der ersten und/oder zweiten Messelektrode hervorgerufen sein. Alternativ kann eine derartige Asymmetrie durch eine Schiefstellung des Rohrs hervorgerufen werden, also einen Winkelversatz um eine Rohrachse, entlang der sich das Rohr erstreckt.

Während des dritten Schritts kann zwischen den zweiten Messwerten an der ersten und zweiten Messelektrode eine Asymmetrie erfasst werden, die durch eine Asymmetrie der im Rohrquerschnitt vorliegenden Stromdichte hervorgerufen ist. Auch dadurch können Verschmutzungen der ersten und/oder zweiten Messelektrode erkannt werden, oder eine Schiefstellung des Rohrs. Ebenso kann eine Asymmetrie zwischen den Messwerten erfasst werden, die an der ersten und zweiten Erdungselektrode erfasst werden. Beispielsweise kann eine Erdungselektrode, die im Bereich eines Tiefpunkts des Rohrs angeordnet ist, mit abgesunkenen Verschmutzungen besetzt sein. In einem bestimmungsgemäßen Betriebszustand hingegen spiegeln die ersten und zweiten Messwerte aus dem zweiten bzw. dritten Schritt die elektrische Leitfähigkeit des Fluids im Rohr wider. Bei einer Verschmutzung hingegen ergeben sich gegenüber dem bestimmungsgemäßen Zustand veränderte Kennlinien der Charakteristiken der elektrischen Leitfähigkeit bei Gleichtaktanregung und Gegentaktanregung. Durch Abgleich der im zweiten und dritten Schritt ermittelten Asymmetrien sind somit unterschiedliche Arten von Verschmutzung an der Wandung des Rohrs bzw. Schiefstellungen des Rohrs selbsttätig unterscheidbar. Ferner können reduziert ausgeprägte Asymmetrien der Messwerte an einem Erdungselektrode im Bereich des Tiefpunkts des Rohrs und einer Erdungselektrode im Bereich eines Scheitelpunkts des Rohrquerschnitts, bereichsweise unterschiedliche elektrische Leitfähigkeiten des Fluids anzeigen. Dadurch ist beispielsweise eine Entmischung des Fluids in unterschiedlich leitfähige Komponenten erkennbar, die bei Entmischung im Rohrquerschnitt zumindest teilweise geschichtet vorliegen. Auch dadurch wird durch das beanspruchte Verfahren eine zusätzliche Diagnosemöglichkeit bereitgestellt.

Ferner können in einem weiteren siebten Schritt des Verfahren Messströme angeregt werden, die betragsmäßig ungleich sind. Hierdurch wird das Prinzip einer asymmetrischen Anregung verwirklicht. Korrespondierend zum zweiten oder dritten Schritt wird im siebten Schritt an der ersten und/oder zweiten Messelektrode zumindest ein Vergleichsmesswert erfasst. Insbesondere kann zumindest einer der Messströme im siebten Schritt im Wesentlichen gleich Null sein. Bei einem Sinken des Füllstands, bei dem die zweite Erdungselektrode freigelegt wird, ist ein Absinken eines Messwerts, insbesondere der Erdungsstromstärke, an der zweiten Erdungselektrode erfassbar und gleichzeitig ein Ansteigen eines Messwerts, insbesondere der Erdungsstromstärke, an der ersten Erdungselektrode. Ebenso ist gleichzeitig eine Änderung des zumindest einen Vergleichsmesswerts an der ersten und/oder zweiten Messelektrode erfassbar. Insbesondere kann im siebten Schritt abwechselnd an der ersten und zweiten Messelektrode ein Messstrom von im Wesentlichen Null angelegt werden. Korrespondierend wird an der jeweils anderen Messelektrode ein Messstrom ungleich Null angelegt. Dadurch ist eine weitergehende Plausibilisierung des im vierten Schritt ermittelten Füllstands möglich.

Weiter ist die asymmetrische Anregung im zweiten Durchgang des Verfahrens mit der symmetrischen Anregung im ersten Durchgang kombinierbar. Im beanspruchten Verfahren kann ferner zwischen den im vierten und siebten Schritt ermittelten Füllständen eine Abweichung festgestellt werden. Diese Abweichung kann durch eine Verunreinigung einer der Messelektroden oder eine Schiefstellung der Messelektroden und/oder zumindest einer Erdungselektrode hervorgerufen werden. Ebenso kann eine entsprechende Warnung ausgegeben werden. Durch die so verwirklichte Warnfunktion wird die Vielseitigkeit eines Durchflussmesssystems, auf dem das Verfahren durchgeführt wird, weiter gesteigert. Alternativ oder ergänzend kann bei einer asymmetrischen Anregung auch eine asymmetrische Anordnung der ersten und zweiten Messelektrode erkannt und/oder kompensiert werden. Das beanspruchte Verfahren ist dadurch auch bei Messelektroden in beliebiger, also auch asymmetrischer Anordnung, am Rohr, durchgeführt werden. Folglich ist das beanspruchte Verfahren bei einer Vielzahl an Durchflussmesssystemen nachrüstbar.

In einer weiteren Ausführungsform des beanspruchten Verfahrens kann in einem achten Schritt ein Erwartungswert für den im siebten Schritt erfassten Vergleichsmesswert ermittelt werden. Insbesondere können die Mesströme, die im siebten Schritt derart ausgebildet sein, dass diese jeweils einer Superposition der Mesströme aus dem zweiten und dritten Schritt entsprechen. Dementsprechend werden im achten Schritt Superpositionen der ersten und zweiten Messwerte ermittelt, die mit den jeweiligen Mesströmen korrespondieren. Eine Superposition eines ersten und eines zweiten Messwerts aus einem entsprechenden zweiten und dritten Schritt bildet den Erwartungswert für den im siebten Schritt erfassten Vergleichsmesswert. Im achten Schritt wird der Vergleichsmesswert mit dem Erwartungswert verglichen. Wenn eine Abweichung zwischen dem Vergleichsmesswert und der Erwartungswert einen einstellbaren Toleranzwert übersteigt, wird ein bestimmungswidriger Betriebszustand des Durchflussmesssystems erkannt. Dementsprechend kann eine Warnung ausgegeben werden. Die Erfindung basiert unter anderem auf der überraschenden Erkenntnis, dass die symmetrische Anregung und die asymmetrische Anregung über das Superpositionsprinzip miteinander verknüpft sind. Das beanspruchte Verfahren ist dadurch zuverlässig selbsttätig auf seine Funktionstüchtigkeit überprüfbar.

Das Verfahren kann weiter einen neunten Schritt aufweisen, in dem ein zeitlicher Gradient eines Absinkens und/oder Ansteigens des Füllstands erfasst wird. Alternativ oder ergänzend kann im neunten Schritt auch eine Dauer zwischen dem Absinken und Ansteigen des Füllstands erfasst werden. Das Absinken bzw. Ansteigen des Füllstands ist mittels eines der oben skizzierten Verfahren durchführbar. Weiter wird im neunten Schritt anhand des erfassten zeitlichen Gradienten und/oder der erfassten Dauer das Vorliegen einer Mehrphasenströmung erkannt. Bei einer Mehrphasenströmung umfasst das Fluid eine erste Komponente und eine zweite Komponente, die eine geringere elektrische Leitfähigkeit aufweist als die erste Komponente. Die erste Komponente kann beispielsweise Wasser sein und die zweite Komponente Luft oder Öl und somit zur ersten Komponente eine Fremdphase darstellen. Wenn eine Fremdphase, beispielsweise eine Blase oder ein Tropfen, an einer Rohrwandung an der ersten oder zweiten Erdungselektrode entlangfließt, wird dies, wie beispielsweise im zweiten, dritten oder sechsten Schritt skizziert, als Absinken des Füllstands erkannt. Wenn die Fremdphase die erste oder zweite Erdungselektrode passiert, wird die analog als Ansteigen des Füllstands erkannt. Zum Absinken und/oder zum Ansteigen des Füllstands wird im neunten Schritt ein zeitlicher Gradient ermittelt. Der zeitliche Gradient kann mit einem einstellbaren Mehrphasen-Toleranzwert verglichen werden. Wenn der zeitliche Gradient den Mehrphasen-Toleranzwert betragsmäßig übersteigt, wird ein Passieren einer Fremdphase im Rohr, und damit das Vorliegen einer Mehrphasenströmung erkannt. Die Fremdphase kann als Gasphase ausgebildet sein oder als Tropfen, beispielsweise als Öltropfen. Alternativ oder ergänzend kann die Dauer, für die der Füllstand zwischenzeitig verringert ist, im neunten Schritt ermittelt werden und mit einem einstellbaren Mehrphasen-Grenzwert verglichen werden. Wenn die ermittelte Dauer den Mehrphasen-Grenzwert unterschreitet, ist das Passieren einer Fremdphase im Fluid, und damit das Vorliegen einer Mehrphasenströmung erkannt. Des Weiteren kann im neunten Schritt ermittelt werden, ob abgesunkene Füllstand wieder auf das vorherige Niveau zurückkehrt. Dadurch ist das Erkennen einer Mehrphasenströmung im Rohr verifizierbar. Im neunten Schritt sind beispielsweise eine Pfropfenströmung oder eine Schwallströmung erkennbar. Weiter wird im neunten Schritt eine Warnung an einen Benutzer oder eine Datenschnittstelle ausgegeben. Das beanspruchte Verfahren ist somit dazu geeignet, die Erkennung einer Mehrphasenströmung während eines Messbetriebs eines Durchflussmesssystems durchzuführen und ist dadurch funktionell vielseitig.

Des Weiteren kann das Verfahren einen zehnten Schritt umfassen, in dem eine Differenz zwischen Messwerten der ersten und zweiten Erdungselektrode erfasst werden. Es kann sich hierbei insbesondere Messwerte von im Wesentlichen synchron ausgegeben Mesströmen handeln. Wenn eine Blase bzw. ein Tropfen der zweiten Komponente im Bereich der Messelektroden exzentrisch im Rohr vorbeifließt, stellt die Fremdphase eine Verengung eines elektrisch leitenden Bereichs im Fluid dar. Insbesondere während des dritten Schritts wird ein Stromfluss des Messstroms zur ersten oder zweiten Erdungselektrode gehemmt. Folglich ist zwischen Messwerten, die an der ersten und zweiten Erdungselektrode erfasst werden, im zehnten Schritt eine Differenz erfassbar. Wenn die erfasste Differenz einen Mehrphasen-Schwellenwert betragsmäßig übersteigt, wird das Vorliegen einer Mehrphasenströmung im Rohr im zehnten Schritt erkannt. Bei Vorliegen einer Mehrphasenströmung wird im zehnten Schritt eine Warnung an einen Benutzer oder an eine Datenschnittstelle ausgegeben. Insbesondere ist so eine sogenannte Blasenströmung erkennbar. Die funktionelle Vielseitigkeit des beanspruchten Verfahrens wird so weiter gesteigert.

Alternativ oder ergänzend kann im zehnten Schritt die Lage der Fremdphase erfasst werden. Dazu können die im dritten Schritt, also einer Gleichtaktanregung, erfassten zweiten Messwerte zusammen mit mindestens einem Messwert an der ersten und/oder zweiten Erdungselektrode ausgewertet werden. Die erste und/oder zweite Erdungselektrode werden dazu im zehnten Schritt nicht-erdend geschaltet und sind dazu mit geeigneten Schaltmitteln versehen, die durch die Auswertungseinheit betätigbar sind. Insbesondere ist erfassbar, an welcher der Messelektroden und zumindest einen Erdungselektrode die stärkste Änderung des korrespondierenden Messwerts eintritt, durch die ein Rückgang der elektrischen Leitfähigkeit im Bereich der entsprechenden Messelektrode bzw. Erdungselektrode angezeigt wird. Insbesondere kann an der entsprechenden Messelektrode bzw. Erdungselektrode eine vorliegende elektrische Spannung erfasst werden. Als Lage der Fremdphase wird ein Sektor im Rohrquerschnitt erkannt, der am nächsten zur entsprechenden Messelektrode bzw. Erdungselektrode liegt. Im zehnten Schritt kann somit die Lage der Fremdphase anhand von zweiten Messwerten und zumindest einem Messwert der ersten und/oder zweiten Erdungselektrode erkannt, die

Weiter alternativ oder ergänzend können im zehnten Schritt auch die ersten Messwerte an den Messelektroden ausgewertet werden, die bei einer Gegentaktanregung, wie beispielsweise im zweiten Schritt, hervorgerufen werden. Diese werden zusammen mit zumindest einem Messwert an der ersten und/oder zweiten Erdungselektrode ausgewertet. Die erste und/oder zweite Erdungselektrode werden dazu im zehnten Schritt nicht-erdend geschaltet und sind dazu mit geeigneten Schaltmitteln versehen, die durch die Auswertungseinheit betätigbar sind. Dadurch ist eine Lage der Fremdphase entlang einer Verbindungslinie zwischen der ersten und zweiten Messelektrode erkennbar. Anhand der ersten Messwerte an der ersten und zweiten Messelektrode ist erkennbar, ob sich eine Fremdphase im Bereich der Verbindungslinie befindet. Bei Vorliegen einer Fremdphase im Bereich der Verbindungslinie steigt beispielsweise eine an der ersten und zweiten Messelektrode erfasste Spannung an. Ferner ist in Abhängigkeit vom Vorzeichen des zumindest einen Messwerts an der ersten und/oder zweiten Erdungselektrode erkennbar, ob sich die Fremdphase näher an der ersten Messelektrode, der zweiten Messelektrode oder in einem Mittelbereich der Verbindungslinie befindet. Dementsprechend kann im zehnten Schritt die Lage der Fremdphase durch Auswerten der ersten Messwerte und des Vorzeichens des zumindest einen Messwerts an der ersten und/oder zweiten Erdungselektrode die Lage der Fremdphase ermittelt werden. Die erkannte Lage der Fremdphase kann an einen Benutzer und/oder eine Datenschnittstelle ausgegeben werden.

Die Auswertungen von ersten Messwerten und zweiten Messwerten aus dem zweiten bzw. dritten Schritt in Verbindung mit Messwerten von nicht-erdend geschalteten Erdungselektroden können ferner zur gegenseitigen Plausibilisierung von erfassten Fremdphasen, und damit von vorliegenden Mehrphasenströmungen, miteinander verglichen werden. Dadurch ist insgesamt eine zuverlässige Erkennung von Mehrphasenströmungen, insbesondere von Schwallströmungen und Pfropfenströmungen möglich.

Ferner ist bei einem im Wesentlichen horizontal ausgerichteten Rohr durch die Erkennung der Lage der Fremdphase ermittelbar, aus welchem Stoff die Fremdphase besteht. Beispielsweise ist bei einem Fluid, das als erste Komponente eine Flüssigkeit aufweist, eine überwiegend in einem Bereich des Scheitelpunkts des Rohrquerschnitts vorliegende Fremdphase typischerweise ein Gas oder eine Flüssigkeit mit einer geringeren Dichte als die erste Komponente. Flüssigkeiten oder Feststoffe, also Partikel, mit einer höheren Dichte als die erste Komponente des Fluids fließen hingegen typischerweise im Bereich eines Tiefpunkts des Rohrquerschnitts entlang. Infolgedessen erlaubt das beanspruchte Verfahren es, selbsttätig eine nähere Charakterisierung der Mehrphasenströmung durchzuführen. Im zehnten Schritt ist somit an einen Benutzer und/oder eine Datenschnittstelle eine Angabe über die Fremdphase der Mehrphasenströmung ausgebbar.

In einer weiteren Ausführungsform des beanspruchten Verfahrens wird für die ersten und/oder zweiten Messwerte ein Signalrauschen erfasst. Anhand des Signalrauschens ist im Wesentlichen kontinuierlich der Füllstand im Rohr ermittelbar. Die Erfindung basiert unter anderem auf der überraschenden Erkenntnis, dass zwischen dem Füllstand im Rohr und dem Signalrauschen ein auswertbarer Zusammenhang besteht. Dazu können im beanspruchten Verfahren Kennlinien verwendet werden, die beispielsweise durch Kalibrierläufe des Durchflussmesssystems ermittelt sind. Der Füllstand kann somit ergänzend durch Auswertung des Signalrauschens ermittelt werden. Dies erlaubt eine Plausibilisierung des beispielsweise im vierten Schritt ermittelten Füllstands. Des Weiteren kann das Rohr mit einer ringförmigen ersten Erdungselektrode ausgestattet sein. Da beanspruchte Verfahren ist dadurch auf eine breitere Spanne an Durchflussmesssystemen anwendbar.

Ferner können der zweite Schritt und der dritte Schritt zumindest teilweise gleichzeitig durchgeführt werden. Zur zumindest teilweise gleichzeitigen Durchführung der sogenannten Gleichtaktanregung und Gegentaktanregung im zweiten bzw. dritten Schritt können die jeweiligen Messströme mit unterschiedlichen Frequenzen angeregt werden. Die Messströme können dazu als Wechselströme mit einstellbarer Frequenz ausgebildet sein. Zu einer einfachen Unterscheidung kann zwischen den Frequenzen der Messströme im zweiten und dritten Schritt eine einstellbare Frequenzdifferenz liegen. Das beanspruchte Verfahren kann dadurch zeitsparend durchgeführt werden und in den Messbetrieb eines entsprechenden Durchflussmesssystems integriert werden. Ebenso sind im zweiten und dritten Schritt erste und zweite Messwerte mit im Wesentlichen gleichem Zeitstempel erzeugbar. Ungenauigkeiten durch Zeitversatz zwischen dem zweiten und dritten Schritt sind dadurch vermeidbar. Insgesamt wird so eine zuverlässige Ermittlung des Füllstands gewährleistet.

Die zugrundeliegende Aufgabe wird gleichermaßen durch eine erfindungsgemäße Auswertungseinheit gelöst. Die Auswertungseinheit ist zu einem Ermitteln eines Füllstands eines Rohrs ausgebildet. Ebenso ist die Auswertungseinheit zu einem Empfangen und Verarbeiten von Messsignalen von Messvorrichtungen ausgebildet, die mit der Auswertungseinheit koppelbar sind. Zu den Messvorrichtungen gehören eine erste Messelektrode, eine zweite Messelektrode und eine erste Erdungselektrode, die separat oder kombiniert mit der Auswertungseinheit koppelbar sind. Die Messsignale entsprechen dabei den oben skizzierten Messwerten von den Messelektroden und/oder den Erdungselektroden. Die zumindest eine Erdungselektrode dient unter anderem dazu, das Fluid zu erden, so dass beispielsweise bei Gleichtaktanregung eine ein Stromfluss im Fluid zustande kommen kann. Für die Durchflussmessung gemäß dem fünften Schritt dient mindestens eine Erdungselektrode zur Verminderung von Störungen und Begrenzung von Gleichtaktsignalen. Insbesondere kann zumindest eine der Erdungselektroden kann zu einer frequenzabhängigen Erdung ausgebildet sein, so dass z. B. für die Messung im fünften Schritt eine Erdung besteht aber für z. B. die Messung gemäß dem dritten Schritt eine von zwei Erdungselektroden keinen Messstrom ableiten kann. Die erste Messelektrode, die zweite Messelektrode und die erste Erdungselektrode können in einem Rohr, in dem der Füllstand zu ermitteln ist, an einer Innenseite der Wandung derart angebracht werden, dass sie von einem Fluid benetzt sind. Erfindungsgemäß ist die Auswertungseinheit dazu ausgebildet, zumindest eine Ausführungsform des oben beschriebenen Verfahrens durchzuführen. Die oben beschriebenen Merkmale des beanspruchten Verfahrens gelten folglich analog auch für die beanspruchte Auswertungseinheit und sind ohne Weiteres auf diese übertragbar. Die Auswertungseinheit kann mit einem Computerprogrammprodukt ausgestattet sein, das zur Durchführung eines entsprechenden Verfahrens ausgebildet ist. Alternativ oder ergänzend kann die Auswertungseinheit mit einem Chip, Mikrocontroller oder FPGA ausgestattet sein, durch die jeweils das beanspruchte Verfahren umsetzbar ist. Das beanspruchte Verfahren ist im Wesentlichen durch eine erfindungsgemäße Auswertungseinheit an bestehenden Messelektroden bzw. Erdungselektroden implementierbar, beispielsweise im Zuge einer Nachrüstung.

Gleichermaßen wird die eingangs dargestellte Aufgabenstellung durch ein erfindungsgemäßes Durchflussmesssystem gelöst, das eine erste Messelektrode, eine zweite Messelektrode und eine erste Erdungselektrode umfasst. Die erste Messelektrode, die zweite Messelektrode und die erste Erdungselektrode sind mit einer Auswertungseinheit gekoppelt, die ebenso zum Durchflussmesssystem gehört. Die Auswertungseinheit ist zum Ermitteln eines Füllstandes in einem Rohr ausgebildet, an dem die erste Messelektrode, die zweite Messelektrode und die erste Erdungselektrode sind im montierten Zustand des Durchflussmesssystems mit dem Rohr verbunden. Erfindungsgemäß ist die Auswertungseinheit des Durchflussmesssystems gemäß einer der oben skizzierten Ausführungsformen ausgebildet. Die Merkmale der beanspruchten Auswertungseinheit und des beanspruchten Verfahrens sind daher ebenso auf das erfindungsgemäße Durchflussmesssystem übertragbar. Insgesamt ist das erfindungsgemäße Durchflussmesssystem kompakt und bietet mit der Messung eines Durchflusses durch das Rohr und der Ermittlung des Füllstandes darin ein breites Funktionsspektrum. Die erste und zweite Messelektrode können symmetrisch, also im Wesentlichen auf einer Durchmesserlinie bei einem kreisförmigen Querschnitt des Rohrs gegenüberliegend, angeordnet sein. Alternativ können die erste und zweite Messelektrode auch asymmetrisch am Rohr angeordnet sein, also im Wesentlichen auf einer Sekante im Querschnitt des Rohrs liegen. Ferner können die Messelektroden und/oder die zumindest eine Erdungselektrode jeweils als kapazitativ-gekoppelte Elektroden ausgebildet sein. Dabei ist an den Messelektroden bzw. der zumindest einen Erdungselektrode eine Isolierschicht vorgesehen, die diese vom Fluid isoliert. Weiter können im ersten und/oder zweiten Schritt die Messströme mit einstellbaren Frequenzen angeregt werden, durch die dielektrische Eigenschaften des Fluids ermittelbar sind. Des Weiteren können im beanspruchten Verfahren auch Messsignale zum Ermitteln frequenzabhängiger elektrischer bzw. dielektrischer Eigenschaften des Fluids verwendet werden. Dadurch ist eine weitere Verfeinerung der Durchflussmessung möglich.

Ferner wird die zugrundeliegende Aufgabenstellung durch ein erfindungsgemäßes Computerprogrammprodukt gelöst, das zu einem Simulieren eines Betriebsverhaltens eines Durchflussmesssystems ausgebildet ist, das in einem Messabschnitt an einem Rohr angebracht ist. Erfindungsgemäß weist das Computerprogrammprodukt ein digitales Abbild zumindest des Messabschnitts auf, zu dem eine dort angebrachte erste Messelektrode, eine zweite Messelektrode und eine erste Erdungselektrode gehören. Die erste Messelektrode, die zweite Messelektrode und die Erdungselektrode gehören somit zum zu simulierenden Durchflussmesssystem. Erfindungsgemäß ist das Durchflussmesssystem gemäß einer der oben beschriebenen Ausführungsformen ausgebildet. Die Merkmale des beanspruchten Durchflussmesssystems, der beanspruchten Auswertungseinheit und des beanspruchten Verfahrens sind somit auf das erfindungsgemäße Computerprogrammprodukt übertragbar. Das Computerprogrammprodukt kann Befehle umfassen, die einen Computer, auf dem das Computerprogrammprodukt ausgeführt wird, dazu veranlassen, das Betriebsverhalten des entsprechenden Durchflussmesssystems zu simulieren. Insbesondere kann das Betriebsverhalten des Durchflussmesssystems mittels des Computerprogrammprodukts simuliert werden, während auf diesem eine Ausführungsform des beanspruchten Verfahrens durchgeführt wird. Das beanspruchte Verfahren kann auf dem zugrundeliegenden realen, also physikalisch vorhandenen, Durchflussmesssystem durchgeführt werden und/oder auf dem digitalen, also mit dem beanspruchten Computerprogrammprodukt nachgebildeten, Durchflussmesssystem simuliert werden.

Das Computerprogrammprodukt kann zur Simulation über ein Physik-Modul verfügen, in dem das Durchflussmesssystem zumindest teilweise abgebildet ist. Hierzu kann beispielsweise das Durchflussmesssystem in seinem Aufbau und seiner Funktionsweise nachgebildet sein, insbesondere im digitalen Abbild, das zum Computerprogrammprodukt gehört. Alternativ oder ergänzend kann das Durchflussmesssystem auch als Rechenmodell im Physik-Modul ausgebildet sein. Das Physik-Modul kann dazu ausgebildet sein, unter anderem das thermische oder strömungsdynamische Verhalten des Fluids und das sich daraus ergebende Messverhalten des Durchflussmesssystems unter einstellbaren Betriebsbedingungen nachzustellen. Zu den einstellbaren Betriebsbedingungen gehören beispielsweise eine Strömungsgeschwindigkeit, eine Temperatur des Fluids, eine elektrische Leitfähigkeit des Fluids und/oder der Wandung des Rohrs, eine elektrische Stromflussverteilung im Fluid, eine Phasenangabe über das Fluid, ein Wärmeleitverhalten und/oder elektrisches Leitverhalten einer Gas- bzw. Dampfphase im Fluid, ein Förderdruck im Fluid, und/oder eine Viskosität des Fluids gehören. Das Computerprogrammprodukt kann über eine Datenschnittstelle verfügen, über die entsprechende Daten über eine Benutzereingabe und/oder andere simulationsgerichtete Computerprogramme vorgebbar sind. Ebenso kann das Computerprogrammprodukt über eine Datenschnittstelle zu einem Ausgeben von Simulationsresultaten an einen Benutzer und/oder andere simulationsgerichtete Computerprogrammprodukte verfügen. Mittels des Computerprogrammprodukts ist beispielsweise eine defekte Messelektrode oder Erdungselektrode, eine isolierende Verschmutzung einer Mess- oder Erdungselektrode, und/oder eine bestimmungswidrige Einbaulage einer Mess- oder Erdungselektrode erkennbar. Insbesondere ist das Betriebsverhalten des Durchflussmesssystems, ausgedrückt durch Messsignale an der ersten und/oder zweiten Messelektrode, durch Abgleich mit dem simulierten Durchflussmesssystems auf Plausibilität überprüfbar. Des Weiteren ist das Durchflussmesssystem in einfacher Weise modellierbar, also mit einem Minimum an sogenannten CFD-Berechnungen im Betriebsverhalten nachrechenbar. Insbesondere kann das Durchströmungsverhalten im Rohr mit hinreichender Präzision durch algebraische Berechnung approximiert werden. Das erfindungsgemäße Computerprogrammprodukt erlaubt somit eine Modellierung des zugrundeliegenden Durchflussmesssystems bei einem reduzierten Bedarf an Rechenleistung. Hierdurch ist auch eine Vielzahl an derartigen Durchflussmesssystemen, beispielsweise in einer übergeordneten Steuereinheit einer Automatisierungsanlage, nachbildbar. Somit ist insgesamt in einfacher Weise ein besonders realitätstreues Prozessabbild vom Betrieb einer entsprechenden Automatisierungsanlage bereitstellbar. Das Computerprogrammprodukt kann als sogenannter Digitaler Zwilling ausgebildet sein, wie beispielsweise in der Druckschrift

US 2017/286572 A1 beschrieben. Das Computerprogrammprodukt kann monolithisch ausgebildet sein, also vollständig auf einer Hardwareplattform ausführbar. Alternativ kann das Computerprogrammprodukt modular ausgebildet sei und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung, eine Internetverbindung und/oder eine Mobilfunkverbindung sein. Ferner kann durch das erfindungsgemäße Computerprogrammprodukt ein Durchflussmesssystem per Simulation erprobt und/oder optimiert werden.

Ebenso wird die Aufgabenstellung durch ein erfindungsgemäßes Überwachungsverfahren für ein Durchflussmesssystem gelöst. Das Überwachungsverfahren dient dazu, den Betrieb eines Durchflussmesssystems zu überwachen. Das Überwachungsverfahren umfasst einen ersten Schritt, in das Durchflussmesssystem in einem aktiven Betriebszustand bereitgestellt wird. Ebenso wird im ersten Schritt zumindest ein Messwert bereitgestellt, der sich an der ersten und/oder zweite Messelektrode infolge einer Fluidströmung im Rohr ergibt, an dem das Durchflussmesssystems angebracht ist. Ebenso wird mindestens eine Betriebsgröße erfasst und bereitgestellt, durch die der vorliegende Betriebszustand des Durchflussmesssystems vorgegeben ist. Das Verfahren umfasst weiter einen zweiten Schritt, in dem die zumindest eine Betriebsgröße einem Computerprogrammprodukt als Eingabe bereitgestellt wird. Anhand der bereitgestellten Betriebsgröße wird durch das Computerprogrammprodukt im zweiten Schritt ein Soll-Messwert ermittelt, der mit dem im ersten Schritt bereitgestellten Messwert korrespondiert. Das Verfahren umfasst einen dritten Schritt, in dem der Soll-Messwert und der Messwert miteinander verglichen werden. Wenn eine Differenz zwischen dem Messwert und dem Soll-Messwert einen einstellbaren Schwellenwert betragsmäßig übersteigt, wird an einen Benutzer und/oder eine Auswertungseinheit des Durchflussmesssystems eine Warnung ausgegeben. Ergänzend kann in einem vierten Schritt anhand des Soll-Messwerts und des Messwerts über einen Erkennungsalgorithmus eine Ursache für die Differenz zwischen dem Messwert und dem Soll-Messwert identifiziert werden. Der Erkennungsalgorithmus kann beispielsweise als neuronales Netz ausgebildet sein. Erfindungsgemäß ist das Computerprogrammprodukt, das im zweiten Schritt eingesetzt wird, nach einer der oben darstellten Ausführungsformen ausgebildet sein. Jeder der Schritte des beanspruchten Überwachungsverfahrens kann ortsunabhängig auf unterschiedlichen Hardwareplattformen ausgeführt werden. Zwischenresultate einzelner Schritte können über eine kommunikative Datenverbindung zwischen den Hardwareplattformen ausgetauscht werden, beispielswiese über eine Netzwerkverbindung, eine Internetverbindung oder eine Funkverbindung, insbesondere eine Mobilfunkverbindung.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die oben skizzierten Merkmale mit den Merkmalen der in den Figuren gezeigten Ausführungsformen auch kombinierbar. Es zeigen im Einzelnen:
- FIG 1: schematisch eine erste Ausführungsform des beanspruchten Verfahrens in einem ersten Stadium im Querschnitt;
- FIG 2: schematisch die erste Ausführungsform des beanspruchten Verfahrens in einem zweiten Stadium im Querschnitt;
- FIG 3: schematisch eine zweite Ausführungsform des beanspruchten Verfahrens in einem ersten Stadium im Querschnitt;
- FIG 4: schematisch die zweite Ausführungsform des beanspruchten Verfahrens in einem zweiten Stadium im Querschnitt;
- FIG 5: einen vierten Schritt des beanspruchten Verfahrens gemäß der ersten oder zweiten Ausführungsform in einem Diagramm;
- FIG 6: schematisch eine dritte Ausführungsform des beanspruchten Verfahrens in einem ersten Stadium im Querschnitt;
- FIG 7: die dritte Ausführungsform des beanspruchten Verfahrens in einem zweiten Stadium im Querschnitt;
- FIG 8: eine vierte Ausführungsform des beanspruchten Verfahrens in einem dritten Stadium im Diagramm;
- FIG 9: schematisch eine fünfte Ausführungsform des beanspruchten Verfahrens in einem vierten Stadium im Querschnitt.

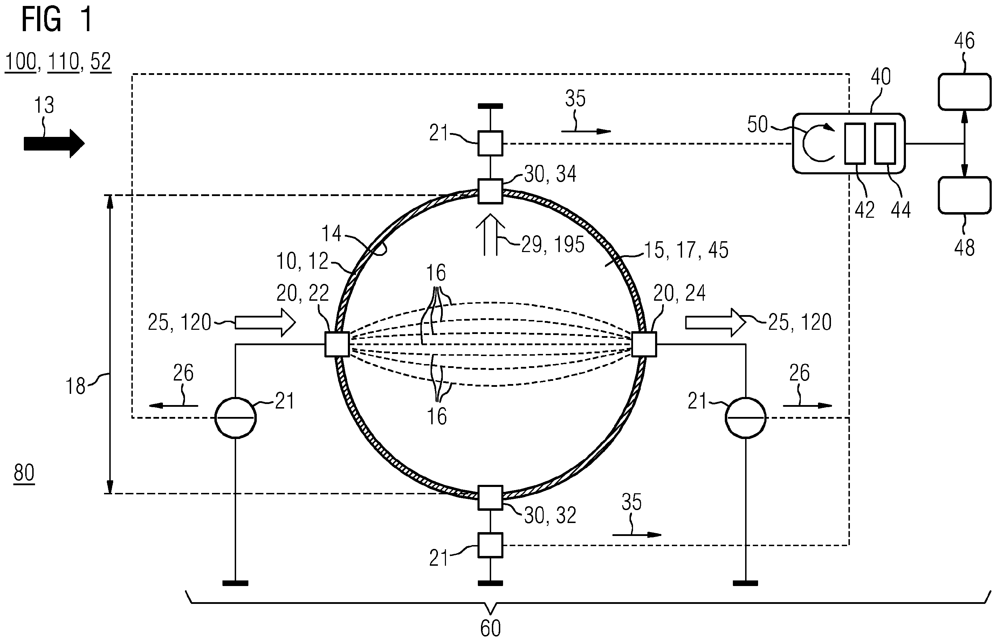

In FIG 1 ist eine erste Ausführungsform des beanspruchten Verfahrens 100 in einem ersten Stadium im Querschnitt dargestellt, das zu einem ersten Durchgang 52 de Verfahrens 100 gehört. Das Verfahren 100 dient zu einem Ermitteln eines Füllstands 18 in einem Rohr 10, das eine Wandung 12 aufweist, in der eine Fluid 15 aufgenommen ist, das das Rohr 10 durchströmt. Der Füllstand 18 gemäß FIG 1 ist maximal, also 100 Prozent. Durch die Strömung in Rohr 10 wird ein Durchfluss 13 hervorgerufen, der in FIG 1 als gefüllter Pfeil versinnbildlicht ist. Das Verfahren 100 wird an einem Durchflussmesssystem 60 durchgeführt, das an der Wandung 12 gegenüberliegend positioniert Messelektroden 20 aufweist. Die Messelektroden 20 sind über eine Auswertungseinheit 40 ansteuerbar. Die Messelektroden 20 sind derart an der Wandung 12 des Rohrs 10 angebracht, dass diese vom Fluid 15 benetzbar sind. Eine erste und eine zweite Messelektrode 22, 24 sind im Wesentlichen horizontal gegenüberliegend positioniert. Weiter sind die Messelektroden 20 insoweit ansteuerbar, dass an diesen jeweils einstellbare Messströme 25 anregbar sind. Das Durchflussmesssystem 60 umfasst ferner Erdungselektroden 30, die durch das Fluid 15 benetzbar an der Wandung 12 des Rohrs 10 angeordnet sind. Die Erdungselektroden sind gegenüberliegend angeordnet, wobei an eine erste Erdungselektrode 32 in an einem Tiefpunkt des Rohrs 10 positioniert ist und eine zweite Erdungselektrode 34 an einem Scheitelpunkt des Rohrs 10. Sowohl die Messelektroden 20 als auch die Erdungselektroden 30 sind jeweils mit Messvorrichtungen 21 versehen, die jeweils zum Erfassen von zumindest einer elektrischen Größe ausgebildet sind. Die Messvorrichtungen 21 sind jeweils mit der Auswertungseinheit 40 gekoppelt, die ebenfalls zum Durchflussmesssystem 60 gehört. Das Verfahren 100 geht von einer Ausgangslage aus, in der das Rohr 10 in einem zumindest teilweise mit dem Fluid 15 befüllten Zustand bereitgestellt ist und somit ein erster Verfahrensschritt 110 abgeschlossen ist. Das Fluid 15 weist eine elektrische Leitfähigkeit 17 auf, so dass sich aus der im Rohr 10 vorliegenden Menge an Fluid 15, also dem Füllstand 18, Impedanzen 45 für die Messströme 25 ergeben.

Das Verfahren 100 umfasst ferner einen zweiten Schritt 120, in dem die erste und zweite Messelektrode 22, 24 angeregt werden und dadurch gegensinnige Messströme 25 hervorgerufen werden. Die gegensinnigen Messströme 25 sind betragsmäßig gleich groß und verwirklichen das Prinzip einer sogenannten Gegentaktanregung. Darüber hinaus werden in zweiten Schritt 120 des Verfahrens 100 jeweils an der ersten und zweiten Messelektrode 22, 24 ein erster Messwert 26 erfasst. Die ersten Messwerte 26 werden an die Auswertungseinheit 40 übertragen. Die Auswertungseinheit 40 verfügt über eine Recheneinheit 42 und eine Steuereinheit 44, die dazu ausgebildet sind, ein Computerprogrammprodukt 50 auszuführen, durch das zumindest die ersten Messwerte 26 auswertbar sind. Für die Gegentaktanregung, wie in FIG 1 dargestellt, ergibt sich eine Impedanz 45 für das Fluid 15, die über die ersten Messwerte 26 ermittelbar ist. Die Auswertungseinheit 40 ist ferner mit einer Anzeigeeinheit 46 gekoppelt, über die ermittelte Ergebnisse, insbesondere ermittelte Füllstände 18, an einen Benutzer ausgebbar sind. Ebenso ist die Auswertungseinheit 40 mit einer Datenschnittstelle 48 verbunden, über die ermittelte Ergebnisse, insbesondere ermittelte Füllstände 18, weitergebbar sind, beispielsweise an eine nicht gezeigte übergeordnete Steuereinheit. Zumindest teilweise gleichzeitig oder zeitlich versetzt zum zweiten Schritt 120 wird im Verfahren 100 ein fünfter Schritt 195 durchgeführt, in dem durch Magnetfelder induzierte Spannungen 29 über die erste Messelektrode 22 erfasst werden, durch die der Durchfluss 13, also die durchströmende Menge an Fluid 15 pro Zeiteinheit, ermittelbar ist. Der fünfte Schritt 195 gehört zu einem Messbetrieb, zu dem begleitend das Verfahren 100 durchführbar ist. Das Ermitteln des Durchflusses 13 erfolgt auch durch die Auswertungseinheit 40. FIG 1 zeigt im Querschnitt einen Messabschnitt entlang des Rohrs 10, der in einem digitalen Abbild abgebildet ist, das zu einem Computerprogrammprodukt 80 gehört, das dazu ausgebildet ist, das Betriebsverhalten des Durchflussmesssystems 60 zu simulieren. Das Computerprogrammprodukt 80 ist hierzu als Digitaler Zwilling ausgebildet.

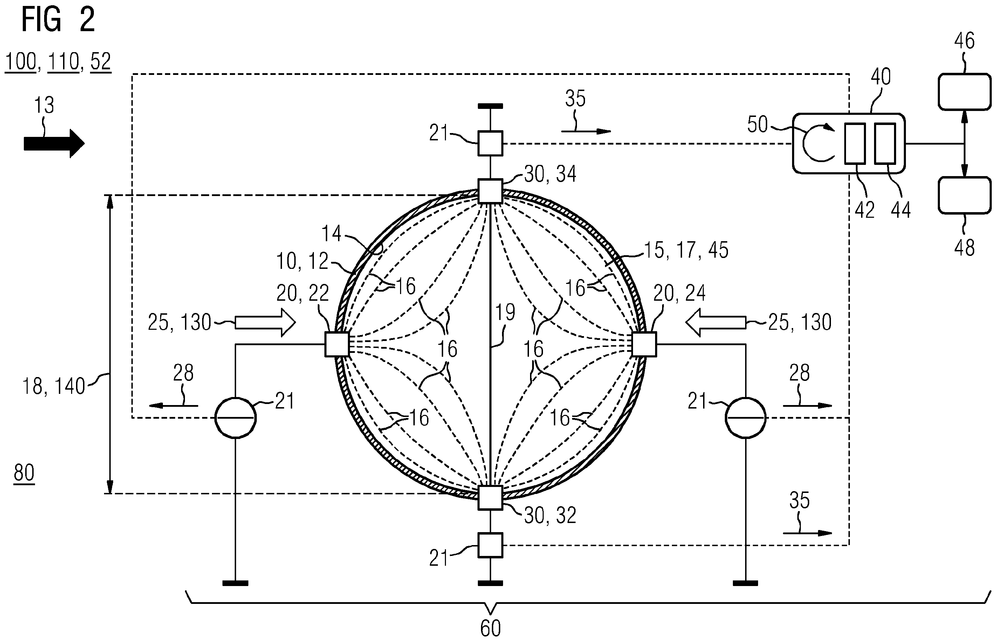

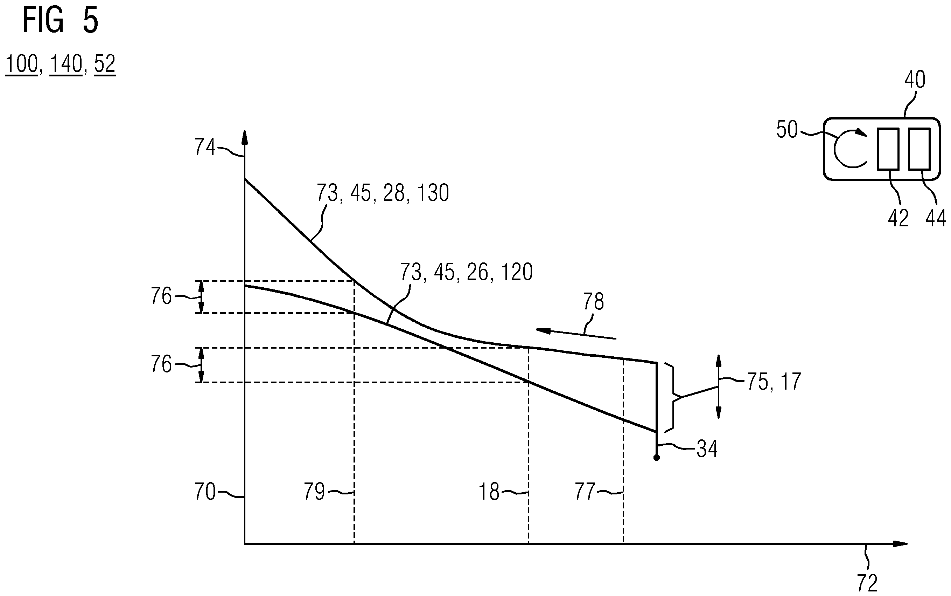

Die erste Ausführungsform des beanspruchten Verfahrens 100 ist in FIG 2 in einem zweiten Stadium gezeigt, das auf das in FIG 1 gezeigte erste Stadium folgt und noch zum ersten Durchgang 52 des Verfahrens 100 gehört. Es liegt weiterhin ein maximaler Füllstand 18 im Rohr 10 vor, also 100 Prozent. Im zweiten Stadium erfolgt ein dritter Schritt 130, in dem gleichsinnig Messströme 25 angeregt werden, so dass ein Stromfluss von jeweils der ersten und zweiten Messelektrode 22, 24 zur ersten und zweiten Erdungselektrode 32, 34 eintritt. Die von der ersten und zweiten Messelektrode 22, 24 angeregten Messströme 25 sind betragsmäßig gleich groß. Es ergeben sich bezogen auf eine Verbindungslinie 19 zwischen der ersten und zweiten Erdungselektrode 32, 34 symmetrisch ausgebildete Stromflusslinien 16 im Querschnitt des Rohrs 12. Die Anregung der ersten und zweiten Messelektrode 22, 24 verwirklichen im dritten Schritt 130 das Prinzip einer sogenannten Gleichtaktanregung. Während des dritten Schritts 130 werden über die Messvorrichtungen 21 an der ersten und zweiten Messelektrode 22, 24 jeweils zweite Messwerte 28 erfasst und an die Auswertungseinheit 40 weitergeleitet. Für die Mesströme 25, die im dritten Schritt 130 angeregt werden, ist anhand der zweiten Messwerte 28 Impedanzen 45 des Fluids 15 ermittelbar. Ferner ist im dritten Schritt 130 über die Messvorrichtungen 21 an den Erdungselektroden 30 als Messwert 35 jeweils eine Erdungsstromstärke erfassbar, der an die Auswertungseinheit 40 weitergeleitet wird. Aufgrund des maximalen Füllstands 18, wie in FIG 1 und FIG 2 gezeigt, sind die erste und zweite Erdungselektrode 32, 34 vom Fluid 15 benetzt. Durch die Messwerte 35 von der ersten und zweiten Erdungselektrode 32, 34 ist damit das Vorliegen des maximalen Füllstands 18 feststellbar. Das Feststellen des maximalen Füllstands 18 anhand der Messwerte 35 von den Erdungselektroden 30 erfolgt flankierend zu einem Ermitteln des Füllstands 18 in einem vierten Schritt 140 des Verfahrens 100. Im vierten Schritt 140 wird der Füllstand 18 anhand der im zweiten und dritten Schritt 120, 130 über die erste und zweite Messelektrode 22, 24 ermittelten ersten Messwerte 26 und zweiten Messwerte 28 ermittelt. Die ersten und zweiten Messwerte 26, 28 aus dem zweiten bzw. dritten Schritt 120, 130 ergeben eine im Wesentlichen kontinuierliche Charakteristik, die eine kontinuierliche Ermittlung des Füllstands 18 erlaubt. Dazu werden die ersten und zweiten Messwerte 26, 28 aus dem zweiten und dritten Schritt 120, 130 in der Auswertungseinheit 40 mittels des darin ausgeführten Computerprogrammprodukts 50 ausgewertet. Der vierte Schritt 140 wird im Folgenden in FIG 5 näher dargestellt. Auch die in FIG 2 dargestellten Schritte sind über das als Digitaler Zwilling ausgebildete Computerprogrammprodukt 80 nachstellbar, das dazu ausgebildet ist, das Betriebsverhalten des Durchflussmesssystems 60 zu simulieren.

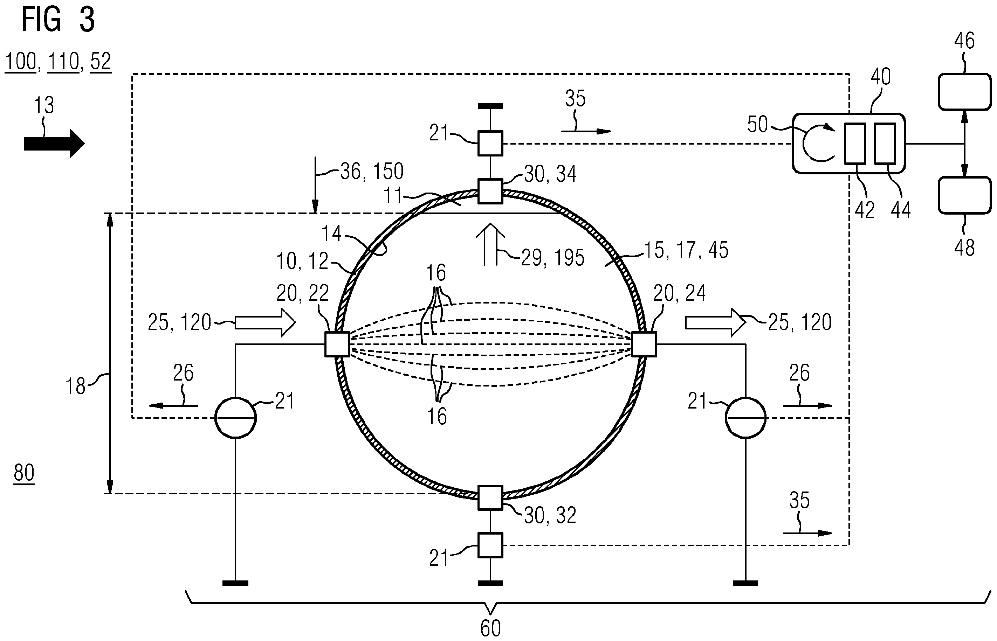

Eine zweite Ausführungsform des beanspruchten Verfahrens 100 ist in FIG 3 in einem ersten Stadium dargestellt, das zu einem ersten Durchgang 52 des Verfahrens 100 gehört. Das Verfahren 100 wird an einem Durchflussmesssystem 60 durchgeführt, das in seinem Aufbau dem Durchflussmesssystem 60 nach FIG 1 und FIG 2 entspricht. Die Beschreibungen zum Aufbau aus FIG 1 und FIG 2 gelten für FIG 3 daher analog. In FIG 3 ist ein erster Schritt 110 des Verfahrens 100 abgeschlossen, in dem das Rohr 10 in einem zumindest teilweise mit Fluid 15 befüllten Zustand bereitgestellt wird.

Im ersten Stadium des Verfahrens 100 gemäß FIG 3 liegt ein verringerter Füllstand 18 vor, der unterhalb von 100 Prozent liegt. Weiter wird im Verfahren 100 ein zweiter Schritt 120 durchgeführt, in dem an der ersten und zweiten Messelektrode 22, 24 gegensinnige Messströme 25 angeregt werden, die betragsmäßig gleich groß sind. Durch die gegensinnigen angeregten Messströme 25 wird ein Stromfluss von der ersten Messelektrode 22 zur zweiten Messelektrode 24 hervorgerufen und das Prinzip der Gegentaktanregung verwirklicht. Die Messströme 25 durchlaufen den Querschnitt des Rohrs 10, wobei das Fluid 15 als elektrischer Leiter dient. Durch den verringerten Füllstand 18 steht somit zwischen der ersten und zweiten Messelektrode 22, 24 ein reduzierter Leiterquerschnitt zur Verfügung. Weiter werden im zweiten Schritt 120 erste Messwerte 26 an der ersten und zweiten Messelektrode 22, 24 erfasst. Die ersten Messwerte 26 sind charakteristisch für die bei Gegentaktanregung vorliegenden Impedanzen 45 im Fluid 15. Dementsprechend sind erste Messwerte 26 aus dem zweiten Schritt 120 gemäß FIG 3 und FIG 1 unterscheidbar. Es ergibt sich somit eine im Wesentlichen kontinuierliche Charakteristik für unterschiedliche Füllstände 18. Die ersten Messwerte 26 werden im zweiten Schritt 120 an die Auswertungseinheit 40 weitergeleitet.

Weiter liegt am Scheitelpunkt der Wandung 12 des Rohrs 10, im Bereich der zweiten Erdungselektrode 34, aufgrund des verringerten Füllstands 18 eine Gasphase 11 vor. Die zweite Erdungselektrode 34 ist durch die Gasphase 11 vom Fluid 15 getrennt. Weiter erfolgt im ersten Stadium nach FIG 3 ein fünfter Schritt 195 des Verfahrens 100, in dem an der ersten Messelektrode 22 durch Magnetfelder induzierte Spannungen 29 zum Erfassen des Durchflusses 13 im Rohr 10 gemessen werden. Auch der fünfte Schritt 195 wird zumindest teilweise gleichzeitig mit dem zweiten Schritt 120 oder dazu zeitlich versetzt durchgeführt. Das Verfahren 100 ist somit in den Messbetrieb des Durchflussmesssystems 60 integriert. Die in FIG 3 skizzierten Schritte sind durch das als Digitaler Zwilling ausgebildete Computerprogrammprodukt 80 nachstellbar, das dazu ausgebildet ist, das Betriebsverhalten des Durchflussmesssystems 60 zu simulieren.

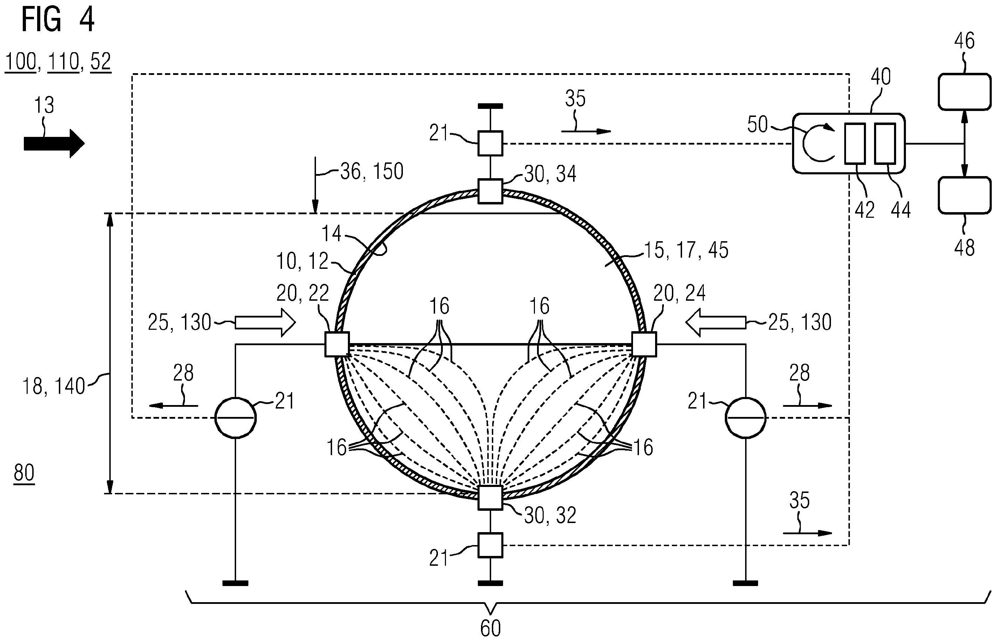

Die zweite Ausführungsform des beanspruchten Verfahrens 100 ist in FIG 4 in einem zweiten Stadium gezeigt, das sich an das erste Stadium gemäß FIG 3 anschließt und ebenfalls zum ersten Durchgang 52 des Verfahrens 100 gehört. Der Füllstand 18 gemäß FIG 4 entspricht dem verringerten Füllstand 18 wie in FIG 3 gezeigt. Auch der Aufbau des Durchflussmesssystems 60 in FIG 4 korrespondiert mit dem Aufbau aus FIG 3. Im zweiten Stadium des Verfahrens 100 wird ein dritter Schritt 130 durchgeführt, in dem an der ersten und zweiten Messelektrode 22, 24 gleichsinnig Mesströme 25 angeregt werden, die betragsmäßig gleich groß sind. Durch die Gasphase 11 am Scheitelpunkt des Rohrs 10, also an der zweiten Erdungselektrode 34, erfolgt im dritten Schritt 130 im Wesentlichen ein Stromfluss von der ersten und zweiten Messelektrode 22, 24 zur ersten Erdungselektrode 32. Dementsprechend liegen zwischen den Messelektroden 20 und der ersten Erdungselektrode 32 entsprechend dicht Stromflusslinien 16 vor. Durch den verringerten Füllstand 18 liegt jeweils zwischen den Messelektroden 20 und der ersten Erdungselektrode 32 ein verringerter Leiterquerschnitt in Form des Fluids 15 vor. Dementsprechend ergibt sich für verringerte Füllstände 18 eine im Wesentlichen kontinuierliche Charakteristik der Impedanzen 45 im Fluid 15. Diese Impedanzen 45 sind über zweite Messwerte 28 ermittelbar, die an der ersten und zweiten Messelektrode 22, 24 erfassbar sind. Die zweiten Messwerte 130 werden im dritten Schritt 130 erfasst und an die Auswertungseinheit 40 weitergeleitet. Über die Auswertungseinheit 40 sind die ersten Messwerte 26 aus dem zweiten Schritt 120, wie in FIG 3 gezeigt, und die zweiten Messwerte 28 aus dem dritten Schritt 130 in einem vierten Schritt 140 auswertbar. Insbesondere wird im vierten Schritt 140 der vorliegende Füllstand 18 anhand der ersten und zweiten Messwerte 26, 28 ermittelt. Dazu ist die Auswertungseinheit 40 mit dem darauf ausgeführten Computerprogrammprodukt 50 ausgestattet. Der vierte Schritt 140 wird im Folgenden in FIG 5 näher dargestellt.

Ferner wird ein sechster Schritt 150 durchgeführt, in dem das Absinken 36 des Füllstands 18 erfasst wird. Darin wird zumindest ein Messwert 35 an der ersten und oder zweiten Erdungselektrode 32, 34 erfasst. Durch das Absinken 36 des Füllstands 18 ist die zweite Erdungselektrode 34, die im Bereich eines Scheitelpunkts des Rohrs 10 angebracht ist, nicht mehr benetzt. Infolge des Absinkens 36 des Füllstands 18 wird ebenfalls die Dichte an Stromlinien 16 im Bereich der ersten Erdungselektrode 32 erhöht, die im Bereich des Tiefpunkts des Rohrs 10 angeordnet ist. Auch ein an der ersten Erdungselektrode 32 erfasster Messwert 35 zeigt durch das Absinken 36 des Füllstands 18 somit eine signifikante Änderung, durch die das Absinken 36 des Füllstands 18 angezeigt wird. Die in FIG 3 skizzierten Schritte sind durch das als Digitaler Zwilling ausgebildete Computerprogrammprodukt 80 nachstellbar, das dazu ausgebildet ist, das Betriebsverhalten des Durchflussmesssystems 60 zu simulieren.

FIG 5 zeigt in einem Diagramm 70 einen vierten Schritt 140 des beanspruchten Verfahrens 100, der beispielsweise in den Ausführungsformen gemäß FIG 1, FIG 2, FIG 3 bzw. FIG 4 durchführbar ist. Der vierte Schritt 140 wird im ersten Durchgang 52 des Verfahrens 100 durchgeführt und dient dazu, ausgehend von ersten und zweiten Messwerten 26, 28, die im zweiten bzw. dritten Schritt 120, 130 erfasst werden, einen im Rohr 10 vorliegenden Füllstand 18 zu ermitteln. Dazu nutzt der vierte Schritt 140 die im Diagramm 70 abgebildeten Zusammenhänge. Das Diagramm 70 weist eine horizontale Füllstandsachse 72 auf, die von links nach rechts einen steigenden Füllstand 18 anzeigt. Weiter umfasst das Diagramm 70 eine vertikale Impedanzachse 74. Das Diagramm 70 weist zwei Kennlinien 73 auf, die jeweils einen Zusammenhang zwischen dem Füllstand 18 und einer vorliegenden Impedanz 45 darstellt. Die Kennlinien 73 sind links durch einen minimalen erfassbaren Füllstand 18 und rechts einen maximal erfassbaren Füllstand 18 begrenzt. Der minimale und der maximale erfassbare Füllstand 18 können abhängig von der Position der Elektroden 0 bzw. 100 Prozent betragen. Die im dritten Schritt 130 verwendete Kennlinie 73 weist im Bereich des maximalen erfassbaren Füllstands 18 einen stufenartigen Rückgang auf, der dadurch auftritt, dass eine zweite Erdungselektrode 34 an einem Scheitpunkt des Rohrs 12 benetzt wird. Die Kennlinien 73 im Diagramm 70 können jeweils durch Berechnung, Simulation oder Messung bereitgestellt sein. Die Kennlinien 73 bilden jeweils Charakteristika, die für Gegentaktanregung oder Gleichtaktanregung im zweiten bzw. dritten Schritt 120, 130 des Verfahrens 100 einen Zusammenhang zwischen ermittelter Impedanz 45 und dem Füllstand 18 beschreibt. Die Lage der Kennlinien 73 ist entlang der Impedanzachse 74 von der im Fluid 15 vorliegenden Leitfähigkeit 17 abhängig. Jedoch ist die Relativlage der Kennlinien 73 zueinander gleich. Daraus ergibt sich eine auf die Leitfähigkeit 17 des Fluids 15 bezogene gleitende Kopplung 75, die in FIG 5 durch einen Doppelpfeil versinnbildlicht ist. Zum Ermitteln des Füllstands 18 werden anhand der ersten und zweiten Messwerte 26, 28 aus dem zweiten und dritten Schritt 120, 130 die jeweiligen Impedanzen 45 ermittelt und ein Impedanzverhältnis 76 ermittelt. Das Impedanzverhältnis 76 wiederum ist charakteristisch für bis zu zwei Positionen entlang der Kennlinien 73. Eine dieser Positionen stellt den vorliegenden Füllstand 18 dar und die andere Position einen Hypothesen-Füllstand 79. Der Hypothesen-Füllstand 79 ist theoretisch auch möglich, jedoch nicht plausibel. Anhand eines bekannten historischen Werts 77 für den Füllstand 18 ist ermittelbar, dass ein langsamer rückläufiger Trend 78 realistischer ist als ein sprungartiger Rückgang auf den Hypothesen-Füllstand 79. Im vierten Schritt 140 wird bei Vorliegen von zwei rechnerisch möglichen Füllständen, also dem realen Füllstand 18 und dem Hypothesen-Füllstand 79 derjenige als realer Füllstand 18 erkannt, der näher am bekannten historischen Füllstand 77 liegt. Eine Wiederholrate, mit der das Verfahren 100 durchgeführt wird, ist dahingehend anpassbar, dass der Abgleich mit dem bekannten historischen Wert 77 eine plausible Unterscheidung erlaubt. Der vierte Schritt 140 erlaubt insgesamt ein im Wesentlichen kontinuierliches Erkennen des Füllstands 18 von Fluid 15 im Rohr 10 unabhängig von der im Fluid 15 vorliegenden elektrischen Leitfähigkeit 17. Der vierte Schritt 140 wird mittels der Auswertungseinheit 40 des nicht näher gezeigten Durchflussmesssystems 60 durchgeführt, beispielsweise durch das in der Auswertungseinheit 40 ausgeführte Computerprogrammprodukt 50.

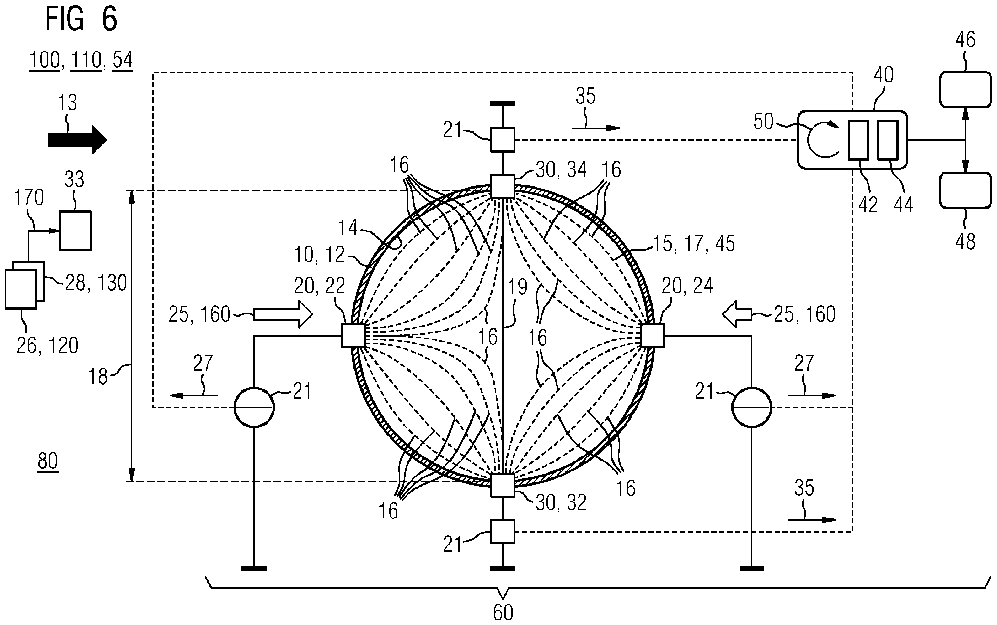

FIG 6 zeigt eine dritte Ausführungsform des beanspruchten Verfahrens 100 in einem ersten Stadium im Querschnitt. Das Verfahren 100 wird an einem Durchflussmesssystem 60 durchgeführt, das in puncto Aufbau mit den Durchflussmesssystemen 60 gemäß FIG 1 bis FIG 4 korrespondiert. Der vorliegende Füllstand 18 ist dabei maximal, also 100 Prozent. Im Verfahren 100 nach FIG 6 wird ein sechster Schritt 160 durchgeführt, in dem an der ersten und zweiten Messelektrode 22, 24 Mesströme 25 angeregt werden, die betragsmäßig unterschiedlich sind. Der sechste Schritt 160 gehört dabei zu einem zweiten Durchgang 54 des Verfahrens 100, der sich dem ersten Durchgang 52 gemäß beispielsweise FIG 1 bis FIG 4 anschließt. Dadurch ergeben sich, bezogen auf eine Verbindungslinie 19 zwischen der ersten und zweiten Erdungselektrode 32, 34 asymmetrisch ausgebildete Stromdichtelinien 16 im Fluid 15. Ebenso wird im siebten Schritt 160 an der ersten und zweiten Messelektrode 22, 24 zumindest ein Vergleichsmesswert 27 erfasst, der an die Auswertungseinheit 40 weitergeleitet wird. Ebenso können Messwerte 35 an der ersten und zweiten Erdungselektrode 32, 34 erfasst und an die Auswertungseinheit 40 weitergeleitet werden.

Im ersten Stadium, wie in FIG 6 gezeigt, wird auch ein siebter Schritt 170 durchgeführt. Im achten Schritt 170 wird aus ersten und zweiten Messwerten 26, 28 aus dem zweiten und dritten Schritt 120, 130, wie in FIG 1 bis FIG 4 abgebildet, zumindest ein Erwartungswert 33 ermittelt. Der zumindest eine Erwartungswert 33 wird im achten Schritt 170 durch Superpositionieren gebildet. Die im siebten Schritt 160 angeregten Mesströme 25 entsprechen ebenfalls einer Superposition der korrespondierenden Messströme 25 aus dem ersten Durchgang 52. Der zumindest eine im siebten Schritt 160 erfasste Vergleichsmesswert 27 sind somit im achten Schritt 170 mit dem korrespondierenden Erwartungswerte 33 verglichen. Dazu wird zwischen dem zumindest einen Vergleichsmesswert 27 und dem korrespondierenden Erwartungswert 33 eine Differenz ermittelt und mit einem einstellbaren Toleranzwert verglichen. Wenn die ermittelte Differenz den einstellbaren Toleranzwert betragsmäßig übersteigt, wird eine Warnung ausgegeben. Wenn die Differenz betragsmäßig geringer ist als der einstellbare Toleranzwert, wird ein bestimmungsgemäßer Zustand des Durchflussmesssystems 60 erkannt. Durch den siebten Schritt 160 und den achten Schritt 170 ist somit das Vorliegen eines bestimmungswidrigen Zustands des Durchflussmesssystems 60 möglich, die in deren Messbetrieb integriert ist. Ein bestimmungswidriger Zustand kann dabei beispielsweise in einer verschmutzen Messelektrode 20, einer verschmutzten Erdungselektrode 30 oder einer verrutschten Montageposition dieser bestehen. Das Funktionsspektrum des Verfahren 100 wird durch die asymmetrische Anregung somit weiter gesteigert. Auch das Betriebsverhalten des Durchflussmesssystems 60 ist durch das als Digitalen Zwilling ausgebildete Computerprogrammprodukt 80 simulierbar und so weitergehend auf bestimmungswidrige Zustände überwachbar.

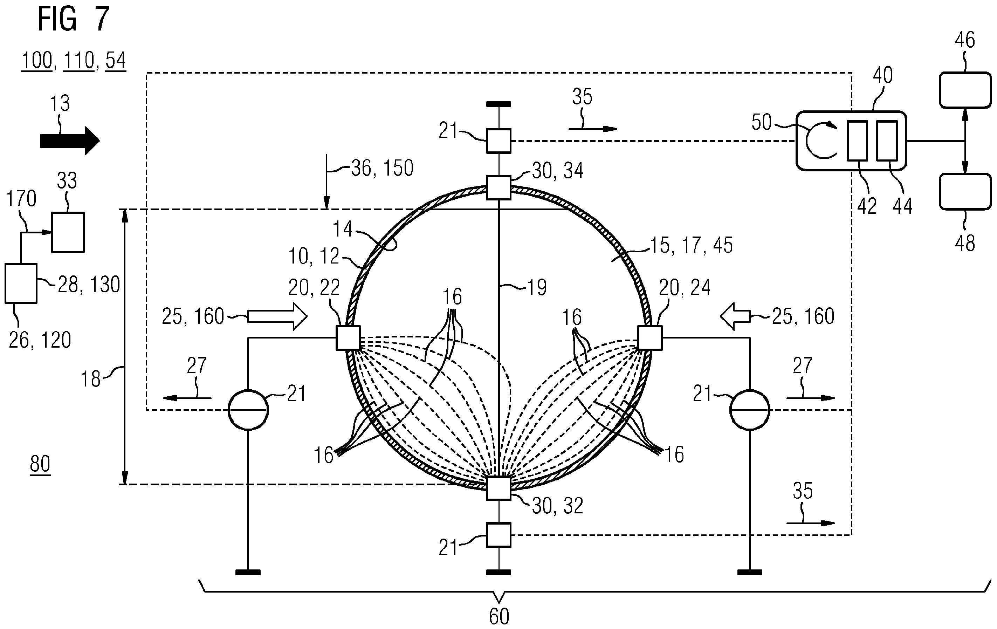

Die dritte Ausführungsform des beanspruchten Verfahrens 100 ist in FIG 7 in einem zweiten Stadium gezeigt, das sich dem in FIG 6 skizzierten ersten Stadium anschließt. Der Aufbau des Durchflussmesssystems 60 in FIG 7 entspricht dem des Durchflussmesssystems 60 aus FIG 6. Gegenüber dem ersten Stadium ist der Füllstand 18 im zweiten Stadium verringert, also unter 100 Prozent. Im zweiten Stadium, das auch zum zweiten Durchgang 54 des Verfahren 100 gehört, werden der sechste und siebte Schritt 160, 170 korrespondierend zum ersten Stadium gemäß FIG 6 durchgeführt. Die von der ersten und zweiten Messelektrode 22, 24 angeregten Messströme 25 sind betragsmäßig ungleich, so dass sich asymmetrisch angeordnete Stromdichtelinien 16 ergeben. Im siebten und achten Schritt 160, 170 ist auch bei verringertem Füllstand 18 das Superpositionsprinzip nutzbar um den im ersten Durchgang 52 ermittelten Füllstand 18 zu plausibilisieren und/oder einen bestimmungswidrigen Zustand des Durchflussmesssystems 60 zu erkennen. Gleichermaßen ist das Betriebsverhalten des Durchflussmesssystems 60 bei verringertem Füllstand 18 und asymmetrischer Anregung im Computerprogrammprodukt 80 simulierbar und weitergehend auf bestimmungswidrige Zustände überwachbar.

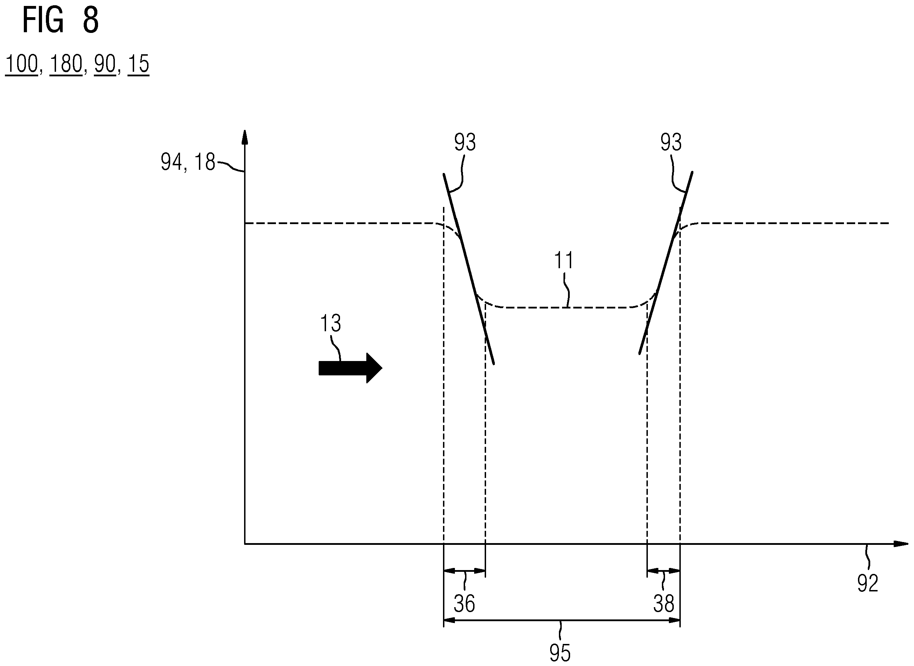

Eine vierte Ausführungsform des beanspruchten Verfahrens 100 ist in FIG 8 in einem Diagramm 90 gezeigt. Die vierte Ausführungsform umfasst einen neunten Schritt 180, der in einem dritten Stadium des Verfahrens 100 durchgeführt wird. Das dritte Stadium kann sich einem zweiten Stadium anschließen, wie beispielsweise in FIG 3 und FIG 4 gezeigt. Der achte Schritt dient zu einem Erkennen einer Mehrphasenströmung im Querschnitt des Rohrs 12. Das Diagramm 90 weist eine horizontale Zeitachse 92 auf und eine vertikale Größenachse 94, an der vorliegende Füllstand 18 im Rohr 10 ablesbar ist.

Das Füllstand 18 liegt auf einem im Wesentlichen konstanten Niveau. Im Fluid 15 bewegt sich mit dem Durchfluss 13 eine Gasphase 11. Die Gasphase 11 passiert einen Messabschnitt des Rohrs 10, in dem zumindest Messelektroden 20, wie in FIG 1 bis FIG 4 gezeigt, angeordnet sind. Durch das beanspruchte Verfahren 100 wird im Rohr 10 bei einem Passieren der Gasphase 11 durch den Messabschnitt zuerst ein Absinken 36 des Füllstands 18 erfasst. Anschließend wird ein Ansteigen 38 des Füllstands 18 auf das vorherige Niveau erfasst. Im neunten Schritt 180 wird das Absinken 36 und/oder das Ansteigen 38 des Füllstands 18 erfasst. Jeweils zum Absinken 36 und/oder dem Absteigen 38 des Füllstands 18 wird ein zeitlicher Gradient 93 ermittelt. Der zeitliche Gradient 93 wird im neunten Schritt 180 weiter mit einem nicht näher gezeigten Mehrphasen-Toleranzwert verglichen. Wenn der zeitliche Gradient 93 betragsmäßig den einstellbaren Mehrphasen-Toleranzwert übersteigt, wird ein Passieren der Gasphase 11 erkannt. Der achte Schritt 180 basiert unter anderem auf der Erkenntnis, dass Gasphasen 11 im beanspruchten Verfahren 100 zu anscheinend abrupt absinkenden bzw. ansteigenden ermittelten Füllständen 18 führen.

Alternativ oder ergänzend kann auch eine Dauer 95 zwischen einem Absinken 36 und einem Ansteigen 38 des Füllstands 18 im neunten Schritt 180 erfassbar. Gasphasen 11 passieren das Rohr 10 im Fluid 15 typischerweise mit erhöhter Geschwindigkeit, so dass der Füllstand 18 im beanspruchten Verfahren 100 scheinbar kurzfristig vorübergehend absinkt. Auch dadurch ist das Vorliegen einer Mehrphasenströmung im Rohr 10 erkennbar. Das beanspruchte Verfahren 100 ist derart schnell durchführbar, dass zuverlässig eine passierende Gasphase 11 erkennbar ist. Dadurch sind eine Pfropfenströmung oder eine Schwallströmung im Rohr 10 erkennbar.

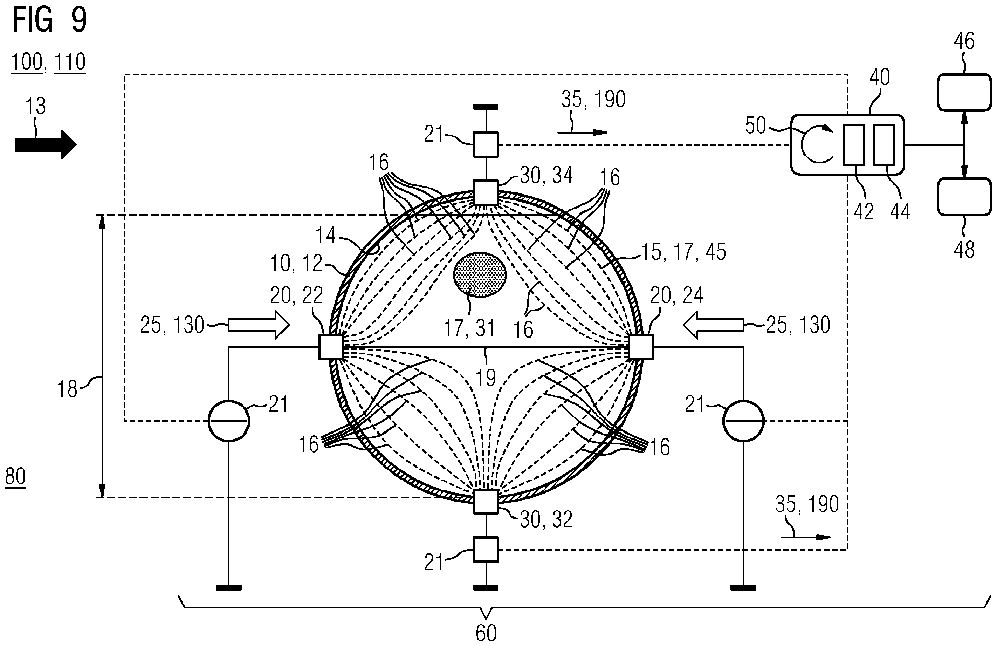

FIG 9 zeigt schematisch eine fünfte Ausführungsform des beanspruchten Verfahrens 100 in einem vierten Stadium, das sich beispielsweise an das erste Stadium, wie in FIG 1 oder FIG 2 gezeigt, oder an das dritte Stadium nach FIG 8 anschließt. In der fünften Ausführungsform des beanspruchten Verfahrens 100 wird ein zehnter Schritt 190 durchgeführt, der dazu dient, eine Mehrphasenströmung zu erkennen. Das Durchflussmesssystem 60 entspricht im Aufbau den Durchflussmesssystemen 60, wie in FIG 1 bis FIG 4, FIG 6 und FIG 7 dargestellt. Mit dem Durchfluss 13 des Fluids 15 strömt eine Fremdphase 31, die als Tropfen, beispielsweise aus Öl, ausgebildet ist, durch das Rohr 10. Die Fremdphase 31 weist eine geringere elektrische Leitfähigkeit 17 auf als das Fluid 15. Im zehnten Schritt 190 werden, wie im dritten Schritt 130 des Verfahrens 100, an der ersten und zweiten Messelektrode 22, 24 gleichsinnige Messströme 25 angeregt und so eine Gleichtaktanregung verwirklicht. Bezogen auf eine Verbindungslinie 19, die im Wesentlichen horizontal zwischen der ersten und zweiten Messelektrode 22, 24 verläuft, stellen sich durch die Fremdphase 31 asymmetrische Stromflusslinien 16 ein. Zwischen der zweiten Erdungselektrode 34 und der ersten bzw. zweiten Messelektrode 22, 24 wird somit der im Fluid 15 vorliegende nutzbare Leiterquerschnitt, also das Fluid 15 selbst, durch die Fremdphase 31 verringert. Weiter wird im zehnten Schritt 190 ein Messwert 35 an der ersten und an der zweiten Erdungselektrode 32, 34 erfasst und an die Auswertungseinheit 40 weitergeleitet. Die im zehnten Schritt 190 an den Erdungselektroden 30 erfassten Messwerte 35 korrespondieren miteinander, beziehen sich also auf die gleiche elektrische Größe. Ebenso wird im zehnten Schritt 190 zwischen den so an der ersten und zweiten Erdungselektrode 32, 34 erfassten Messwerten 34 eine Differenz gebildet. Wenn die Differenz betragsmäßig einen einstellbaren Mehrphasen-Schwellenwert übersteigt, wird ein Vorliegen einer Mehrphasenströmung im Rohr 10 erkannt. Der zehnte Schritt 190 kann in den dritten Schritt 130 integriert sein, oder in Kombination mit den anderen gezeigten Ausführungsformen kombiniert sein. Das beanspruchte Verfahren 100 ist somit auch in der Lage, eine Pfropfenströmung oder Schwallströmung zu erkennen. Wenn bekannt ist, welcher Stoffe die Fremdphase 31 ist, kann ferner über eine Tabelle oder entsprechende Charakteristik ein Volumenanteil der Fremdphase 31 im Fluid 15 ermittelt werden.

## Patentansprüche

1. Verfahren (100) zum Ermitteln eines Füllstands (18) eines Rohrs (10), an dem eine ansteuerbare erste und eine zweite Messelektrode (22, 24) angeordnet sind und das mit zumindest einer Erdungselektrode (30, 32, 34) versehen ist, umfassend die Schritte:
a) Bereitstellen des Rohrs (10) in einem zumindest teilweise mit einem Fluid (15) befüllten Zustand;
**dadurch gekennzeichnet, dass** das Verfahren (100) weiter die Schritte umfasst:
b) Anregen der ersten und zweiten Messelektrode (22, 24) mit gegensinnigen Messströmen (25), wobei die Messströme (25) einen Stromfluss von der ersten Messelektrode (22) zur zweiten Messelektrode (24) hervorrufen, und jeweils Erfassen zumindest eines ersten Messwerts (26) an der ersten und/oder zweiten Messelektrode (22, 24);
c) Anregen der ersten und zweiten Messelektrode (22, 24) mit gleichsinnigen Messströmen (25), wobei die Messströme (25) einen Stromfluss von der ersten und zweiten Messelektrode (22, 24) zu einer ersten Erdungselektrode (32) oder umgekehrt hervorrufen, und jeweils Erfassen eines zweiten Messwerts (28) an der ersten und/oder zweiten Messelektrode (22, 24);
d) Ermitteln des Füllstands (18) des Rohrs (10) anhand zumindest des ersten und zweiten Messwerts (26, 28) gemäß den Schritten b) und c),
wobei in einem weiteren Schritt e) durch die ersten und/oder zweite Messelektrode (22, 24) eine durch ein Magnetfeld im Fluid (15) induzierte Spannung (29) zum Messen eines Durchflusses (13) im Rohr (10) erfasst wird.

2. Verfahren (100) nach Anspruch 1, **dadurch gekennzeichnet, dass** in Schritt d) anhand des ersten Messwerts (26) eine erste Impedanz (45) ermittelt wird und/oder anhand des zweiten Messwerts (28) eine zweite Impedanz (45).

3. Verfahren (100) nach Anspruch 1 oder 2, **dadurch gekennzeichnet, dass** in einem weiteren Schritt f) ein Messwert (35) an der ersten Erdungselektrode (32) und/oder einer zweiten Erdungselektrode (34) zu einem Erkennen eines Absinkens (36) des Füllstands (18) erfasst wird.

4. Verfahren (100) nach einem der Ansprüche 1 bis 3, **dadurch gekennzeichnet, dass** die in Schritt b) und/oder c) angeregten Messströme (25) in zumindest einem ersten Durchgang (52) des Verfahrens (100) betragsmäßig gleich hoch sind.

5. Verfahren (100) nach einem der Ansprüche 1 bis 4, **dadurch gekennzeichnet, dass** in einem weiteren Schritt g) Messströme (25) in der ersten und/oder zweiten Messelektrode (22, 24) angeregt werden, die betragsmäßig ungleich sind und an der ersten und/oder zweiten Messelektrode (22, 24) zumindest ein Vergleichsmesswert (27) erfasst wird.

6. Verfahren (100) nach Anspruch 4 und 5, **dadurch gekennzeichnet, dass** in einem weiteren Schritt h) anhand des ersten und zweiten Messwerts (26, 28) aus dem ersten Durchgang (52) ein Erwartungswert (33) gebildet wird, der mit dem Vergleichsmesswert (27) verglichen wird.

7. Verfahren (100) nach einem der Ansprüche 1 bis 6, **dadurch gekennzeichnet, dass** in einem weiteren Schritt i) ein zeitlicher Gradient (93) des Absinkens (36) und/oder eines Ansteigens (38) des Füllstands (18) und/oder eine Dauer (95) zwischen dem Absinken (36) und Ansteigen (38) erfasst wird und anhand des zeitlichen Gradienten (93) und/oder der Dauer (95) eine Mehrphasenströmung erkannt wird.

8. Verfahren (100) nach einem der Ansprüche 1 bis 7, **dadurch gekennzeichnet, dass** in einem weiteren Schritt j) eine Differenz zwischen Messwerten (35) der ersten und zweiten Erdungselektrode (32, 34) erfasst wird zum Erkennen einer vorliegenden Mehrphasenströmung.

9. Verfahren (100) nach Anspruch 8, **dadurch gekennzeichnet, dass** im Schritt j) anhand von ersten Messwerten (26) aus Schritt b) und/oder zweiten Messwerten (28) aus Schritt c) zusammen mit zumindest einem Messwert (35) an der ersten und/oder zweiten Erdungselektrode (32, 34) eine Lage einer Fremdphase (31) in einem Rohrquerschnitt des Rohrs (12) erkannt wird.

10. Verfahren (100) nach einem der Ansprüche 1 bis 9, **dadurch gekennzeichnet, dass** für den ersten und/oder zweiten Messwert (26, 28) ein Signalrauschen erfasst wird und anhand des Signalrauschens der Füllstand (18) ermittelt wird.

11. Verfahren (100) nach einem der Ansprüche 1 bis 10, **dadurch gekennzeichnet, dass** Schritt b) und Schritt c) zumindest teilweise gleichzeitig durchgeführt werden.

12. Auswertungseinheit (40) zum Ermitteln eines Füllstands (18) eines Rohrs (10), die die zum Empfangen und Verarbeiten von Messsignalen (26, 27, 28, 35) von Messvorrichtungen (21) ausgebildet ist und mit einer ersten Messelektrode (22), einer zweiten Messelektrode (24) und einer ersten Erdungselektrode (32) koppelbar ist, **dadurch gekennzeichnet, dass** die Auswertungseinheit (40) durch Durchführen zumindest eines Verfahrens (100) nach einem der Ansprüche 1 bis 11 ausgebildet ist.

13. Durchflussmesssystem (60), umfassend eine erste Messelektrode (22), eine zweite Messelektrode (24) und eine erste Erdungselektrode (32), die mit einer Auswertungseinheit (40) zum Ermitteln eines Durchflusses (13) in einem Rohr (10) gekoppelt sind, **dadurch gekennzeichnet, dass** die Auswertungseinheit (40) nach Anspruch 12 ausgebildet ist.

14. Computerprogrammprodukt (80) zum Simulieren eines Betriebsverhaltens eines Durchflussmesssystems (60), das in einem Messabschnitt an einem Rohr (10) angebracht ist, und ein digitales Abbild zumindest des Messabschnitts mit einer ersten Messelektrode (22), einer zweiten Messelektrode (24) und einer ersten Erdungselektrode (32) des Durchflussmesssystems (60) aufweist, **dadurch gekennzeichnet, dass** das Durchflussmesssystems (60) nach Anspruch 13 ausgebildet ist.

## Claims

1. Method (100) for ascertaining a fill level (18) of a pipe (10) on which are arranged a first and a second drivable measuring electrode (22, 24) and which is provided with at least one earth electrode (30, 32, 34), comprising the steps of:
a) providing the pipe (10) in a state at least in part filled with a fluid (15);
**characterised in that** the method (100) further comprises the steps of:
b) exciting the first and second measuring electrodes (22, 24) with contradirectional measuring currents (25), wherein the measuring currents (25) bring about current flow from the first measuring electrodes (22) to the second measuring electrode (24), and detecting at least one first measured value (26) at each of the first and/or second measuring electrodes (22, 24);
c) exciting the first and second measuring electrodes (22, 24) with equidirectional measuring currents (25), wherein the measuring currents (25) bring about current flow from the first and second measuring electrodes (22, 24) to a first earth electrode (32) or vice versa, and detecting a second measured value (28) at each of the first and/or second measuring electrodes (22, 24);
d) ascertaining the fill level (18) of the pipe (10) on the basis of at least the first and second measured values (26, 28) according to steps b) and c),
wherein, in a further step e), a voltage (29) induced in the fluid (15) by a magnetic field is detected by the first and/or second measuring electrodes (22, 24) in order to measure flow (13) in the pipe (10).

2. Method (100) according to claim 1, **characterised in that**, in step d), a first impedance (45) is ascertained on the basis of the first measured value (26) and/or a second impedance (45) is ascertained on the basis of the second measured value (28).

3. Method (100) according to claim 1 or 2, **characterised in that**, in a further step f), a measured value (35) is detected at the first earth electrode (32) and/or a second earth electrode (34) in order to identify a fall (36) in the fill level (18).

4. Method (100) according to one of claims 1 to 3, **characterised in that** the measuring currents (25) excited in steps b) and/or c) are identical in magnitude in at least one first pass (52) of the method (100).

5. Method (100) according to one of claims 1 to 4, **characterised in that**, in a further step g), measuring currents (25) are excited in the first and/or second measuring electrodes (22, 24) that are non-identical in magnitude and at least one comparison measured value (27) is detected at the first and/or second measuring electrodes (22, 24).

6. Method (100) according to claims 4 and 5, **characterised in that**, in a further step h), an expected value (33) is formed on the basis of the first and second measured values (26, 28) from the first pass (52), which expected value (33) is compared with the comparison measured value (27).

7. Method (100) according to one of claims 1 to 6, **characterised in that**, in a further step i), a time gradient (93) of the fall (36) and/or a rise (38) in the fill level (18) and/or a duration (95) between the fall (36) and rise (38) is detected and multiphase flow is identified on the basis of the temporal gradient (93) and/or the duration (95).

8. Method (100) according to one of claims 1 to 7, **characterised in that**, in a further step j), a difference is detected between the measured values (35) of the first and second earth electrodes (32, 34) in order to ascertain the presence of multiphase flow.

9. Method (100) according to claim 8, **characterised in that**, in step j), a position of a foreign phase (31) in a pipe cross-section of the pipe (12) is identified on the basis of first measured values (26) from step b) and/or second measured values (28) from step c) together with at least one measured value (35) at the first and/or second earth electrodes (32, 34).

10. Method (100) according to one of claims 1 to 9, **characterised in that** signal noise is detected for the first and/or second measured values (26, 28) and the fill level (18) is ascertained on the basis of the signal noise.

11. Method (100) according to one of claims 1 to 10, **characterised in that** step b) and step c) are carried out at least in part simultaneously.

12. Evaluation unit (40) for ascertaining a fill level (18) of a pipe (10) that is configured to receive and process measurement signals (26, 27, 28, 35) from measuring devices (21) and is couplable with a first measuring electrode (22), a second measuring electrode (24), and a first earth electrode (32), **characterised in that** the evaluation unit (40) is configured to carry out at least one method (100) according to one of claims 1 to 11.

13. Flow measuring system (60) comprising a first measuring electrode (22), a second measuring electrode (24), and a first earth electrode (32) that are coupled with an evaluation unit (40) for ascertaining flow (13) in a pipe (10), **characterised in that** the evaluation unit (40) is configured according to claim 12.

14. Computer program product (80) for simulating the operating behaviour of a flow measuring system (60) that is mounted on a pipe (10) in a measuring portion, and has a digital model at least of the measuring portion with a first measuring electrode (22), a second measuring electrode (24), and a first earth electrode (32) of the flow measuring system (60), **characterised in that** the flow measuring system (60) is configured according to claim 13.

## Revendications

1. Procédé (100) de détermination d'un niveau (18) de remplissage d'un tuyau (10), sur lequel sont montées une première et une deuxième électrodes (22, 24) de mesure pouvant être commandées et qui est pourvu d'au moins une électrode (30, 32, 34) de mise à la terre, comprenant les stades :
a) on se procure le tuyau (10) dans un état rempli au moins en partie d'un fluide (15) ;
**caractérisé en ce que** le procédé (100) comprend en outre les stades :
b) excitation de la première et de la deuxième électrodes (22, 24) de mesure par des courants (25) de mesure en sens contraire, dans lequel les courants (25) de mesure provoquent un flux de courant de la première électrode (22) de mesure à la deuxième électrode (24) de mesure et détection respectivement d'au moins une première valeur (26) de mesure sur la première et/ou la deuxième électrode (22, 24) de mesure ;
c) excitation de la première et de la deuxième électrodes (22, 24) de mesure par des courants (25) de mesure de même sens, dans lequel les courants (25) de mesure provoquent un flux de courant de la première et deuxième électrodes (22, 24) de mesure à une première électrode (32) de mise à la terre ou inversement et détection respectivement d'une deuxième valeur (28) de mesure sur la première et/ou deuxième électrode (22, 24) de mesure ;
d) détermination du niveau (18) de remplissage du tuyau (10) à l'aide d'au moins la première et la deuxième valeurs (26, 28) de mesure suivant les stades b) et c),
dans lequel, dans un autre stade e) on relève, pour la mesure d'un débit (13) dans le tuyau (10), par la première et/ou la deuxième électrode (22, 24) de mesure, une tension (29) induite par un champ magnétique dans le fluide (15).

2. Procédé (100) suivant la revendication 1, dans lequel, dans le stade d) on détermine à l'aide de la première valeur (26) de mesure, une première impédance (45) et/ou à l'aide de la deuxième valeur (28) de mesure, une deuxième impédance (45).

3. Procédé (100) suivant la revendication 1 ou 2, **caractérisé en ce que** dans un autre stade f), on relève pour une détection d'un abaissement (36) du niveau (18) de remplissage, une valeur (35) de mesure sur la première électrode (32) de mise à la terre et/ou une deuxième électrode (34) de mise à la terre.

4. Procédé (100) suivant l'une des revendications 1 à 3, **caractérisé en ce que** les courants (25) de mesure, excités dans le stade b) et/ou c), sont égaux en valeur absolue dans au moins une première passe (52) du procédé (100).

5. Procédé (100) suivant l'une des revendications 1 à 4, **caractérisé en ce que** dans un autre stade g), on excite, dans la première et/ou la deuxième électrode (22, 24) de mesure, des courants (25) de mesure, qui sont inégaux en valeur absolue et on relève au moins une valeur (27) de mesure de comparaison sur la première et/ou deuxième électrode (22, 24) de mesure.

6. Procédé (100) suivant la revendication 4 et 5, **caractérisé en ce que** dans un autre stade h), on forme à l'aide de la première et de la deuxième valeur (26, 28) de mesure à partir de la première passe (52), une valeur (33) escomptée que l'on compare à la valeur (27) de mesure de comparaison.

7. Procédé (100) suivant l'une des revendications 1 à 6, **caractérisé en ce que** dans un autre stade i), on relève un gradient (93) dans le temps de l'abaissement (36) et/ou d'une élévation (38) du niveau (18) de remplissage et/ou une durée (95) entre l'abaissement (36) et l'élévation (38) et on détecte, à l'aide du gradient (93) dans le temps et/ou de la durée (95), un courant polyphasé.

8. Procédé (100) suivant l'une des revendications 1 à 7, **caractérisé en ce que** dans un autre stade j), on relève une différence entre des valeurs (35) de mesure de la première et de la deuxième électrode (32, 34) de mise à la terre pour la détection d'un courant polyphasé existant.

9. Procédé (100) suivant la revendication 8, **caractérisé en ce que** dans le stade j), on détecte à l'aide de premières valeurs (26) de mesure, à partir du stade b) et/ou de deuxièmes valeurs (28) de mesure à partir du stade c), ensemble avec au moins une valeur (35) de mesure sur la première et/ou la deuxième électrode (32, 34) de mise à la terre, une position d'une phase (31) étrangère dans une section transversale du tuyau (12).

10. Procédé (100) suivant l'une des revendications 1 à 9, **caractérisé en ce que** l'on relève un bruit de signal pour la première et la deuxième valeurs (26, 28) de mesure et on détermine un niveau (18) de remplissage à l'aide du bruit de signal.

11. Procédé (100) suivant l'une des revendications 1 à 10, dans lequel on effectue au moins en partie en même temps le stade b) et le stade c).

12. Unité (40) d'évaluation pour la détermination d'un niveau (18) de remplissage d'un tuyau (10), qui est constituée pour la réception et le traitement de signaux (26, 27, 28, 35) de mesure de dispositifs (21) de mesure et qui peut être connectée à une première électrode (22) de mesure, à une deuxième électrode (24) de mesure et à une première électrode (32) de mise à la terre, **caractérisée en ce que** l'unité (40) d'évaluation est constituée pour effectuer au moins un procédé (100) suivant l'une des revendications 1 à 11.

13. Système (60) de mesure du débit, comprenant une première électrode (22), une deuxième électrode (24) de mesure et une première électrode (32) de mise à la terre, qui, pour la détermination d'un débit (13) dans un tuyau (10), sont connectées à une unité (40) d'évaluation, **caractérisé en ce que** l'unité (40) d'évaluation est constituée suivant la revendication 12.

14. Produit (80) de programme d'ordinateur pour la simulation d'un comportement de fonctionnement d'un système (60) de mesure du débit, qui est monté dans une partie de mesure sur un tuyau (10) et qui a une reproduction numérique d'au moins de la partie de mesure, comprenant une première électrode (22) de mesure et une deuxième électrode (24) de mesure et une première électrode (32) de mise à la terre du système (60) de mesure du débit, **caractérisé en ce que** le système (60) de mesure du débit est constitué suivant la revendication 13.
